# EUROPÄISCHE PATENTSCHRIFT

(11) **EP 3 161 344 B1**
(45) Veröffentlichungstag und Bekanntmachung des Hinweises auf die Patenterteilung: **03.01.2018**
(21) Anmeldenummer: 15766152.1
(22) Anmeldetag: 18.09.2015
(51) Int. Cl.: F16G 3/06, B25B 27/22

(54) **VORRICHTUNG ZUM BETÄTIGEN EINES KETTENSCHNELLVERSCHLUSSES**
DEVICE FOR ACTUATING A CHAIN-TYPE QUICK-ACTING CLOSURE
DISPOSITIF DESTINÉ À ACTIONNER UNE ATTACHE RAPIDE POUR CHAÎNE

(43) Veröffentlichungstag der Anmeldung: 03.05.2017
(73) Patentinhaber: QCS Quality Consult Service GmbH, 9058 Brülisau (CH)
(72) Erfinder: LAUER, Stefan, 82467 Garmisch-Partenkirchen (DE)
(74) Vertreter: Zimmermann, Tankred Klaus
(86) Internationale Anmeldenummer: PCT/EP2015/071492
(87) Internationale Veröffentlichungsnummer: WO 2017/045730

(56) Entgegenhaltungen:
- CN-A- 102 887 335
- US-A- 3 379 005
- US-A- 3 648 973
- US-A- 4 394 810

## Beschreibung

Die Erfindung betrifft eine Vorrichtung zum Betätigen von Kettenschnellverschlüssen mit den Merkmalen von Anspruch 1 und ein Verfahren zum Herstellen einer solchen Vorrichtung mit den Merkmalen von Anspruch 14. Ketten werden heutzutage vielseitig und in zahlreichen Anwendungen, vor allem zur Kraftübertragung zwischen zwei Systemen eingesetzt. So sind beispielsweise kraftübertragende Ketten zum Einsatz für Motorsteuerungen bekannt. Des Weiteren werden Ketten als Antriebsketten zum Antrieb diverser Vorrichtungen, wie zum Beispiel zum Antrieb von Fahrzeugen, insbesondere von Zweirädern, oder anderen Maschinen, wie zum Beispiel Turbinen für Windkraftanlagen und dergleichen eingesetzt. Bei Kettensägen können schnell rotierende Ketten sogar als Schneidevorrichtung eingesetzt werden.
Derartige Ketten, und insbesondere Antriebsketten, sind heutzutage vornehmlich als sogenannte Rollenketten oder Bolzenketten ausgebildet. Diese Ketten bestehen in der Regel aus mehreren Kettengliedern, wobei jedes Kettenglied wiederum zwei gegenüberliegend angeordnete Laschen aufweist. Die beiden Laschen eines Kettenglieds sind mittels dazwischen angeordneten Kettenlaschenverbindungsmittelen, wie z.B. Niete, Bolzen und/oder Rollen, miteinander verbunden. Eine solche Kette ist beispielsweise aus der EP 1 245 862 A2 bekannt.
Benachbarte Kettenglieder einer Kette weisen abwechselnd sogenannte Innenlaschen und Außenlaschen auf, wobei die beiden Innenlaschen eines Kettenglieds einen geringeren Abstand zueinander aufweisen als zwei Außenlaschen eines benachbarten Kettenglieds.
Die Abmessung der Innenlaschen ist derart ausgelegt, dass die Außenflächen der beiden Innenlaschen eines Kettenglieds an die Innenflächen der beiden Außenlaschen des jeweils benachbarten Kettenglieds angrenzen. Die beiden Innenlaschen eines Kettenglieds werden sozusagen in die beiden Außenlaschen des jeweils benachbarten Kettenglieds eingeführt.
Jede Innenlasche sowie jede Außenlasche weist an ihren beiden in Zugrichtung außen liegenden Enden jeweils ein Loch auf. Beim Einführen der Innenlaschen in die Außenlaschen werden die Enden der Laschen so zueinander ausgerichtet, dass die Löcher einer Innenlasche mit den Löchern einer benachbarten Außenlasche fluchten. Durch diese in einer Flucht liegenden Löcher werden Bolzen beziehungsweise Niete gedrückt, um die Laschen, und somit die einzelnen Kettenglieder, miteinander zu verbinden. Eine Presspassung zwischen den Nieten und den Löchern sorgt für die Befestigung. Um die Niete herum können ferner Buchsen oder Kettenrollen angeordnet sein. Auf diese Weise wird eine Endloskette in Form einer Bolzen- beziehungsweise Rollenkette hergestellt.

Derartige Ketten sind sehr stabil und ermöglichen hohe Zugkräfte. Die Handhabung bei einem Austausch einzelner Kettenglieder ist jedoch aufwendig und kompliziert. Hierbei müssen die Niete eines auszutauschenden Kettenglieds, oder eines aus mehreren Kettengliedern bestehenden auszutauschenden Segments, durch Herausdrücken vollständig entfernt werden. Anschließend müssen neue Niete eingesetzt und wieder eingedrückt und verpresst werden. Dies geschieht in der Regel mit einem speziell dafür vorgesehenen Werkzeug.

Beispielsweise aus dem Fahrradbereich sind derartige Spezialwerkzeuge für den mobilen Einsatz bekannt. Dabei handelt es sich um sogenannte Kettennieter, die als Bestandteil eines mehrteiligen Multifunktionswerkzeugs mit kompakter Abmessung erhältlich sind. Ein solcher Kettennieter weist einen Aufnahmeabschnitt auf, in den zwei benachbarte Kettenglieder einer Kette eingelegt werden. Der Kettennieter weist außerdem einen sogenannten Kettennietdrückstift auf, der orthogonal zu der eingelegten Kette, beziehungsweise quer zur Kettenlängsrichtung, ausgerichtet ist. Zum Trennen beziehungsweise Öffnen einer Kette wird der Kettennietdrückstift auf den zu entfernenden Niet ausgerichtet und translatorisch auf diesen Niet zubewegt. Durch eine Fortsetzung der Translationsbewegung drückt der Kettennietdrückstift den Niet aus den Kettenlaschen heraus.

Derartige Nietbefestigungen einer Kette sind zwar sehr stabil. Das Lösen einer solchen Nietverbindung einer Kette ist jedoch zeitaufwändig und teilweise umständlich, da die Niete relativ klein und somit teils umständlich handhabbar sind.

Um das Trennen und Verbinden einzelner Glieder einer Kette zu erleichtern sind sogenannte, auch als Kettenschloss bezeichnete, Kettenschnellverschlüsse bekannt. Ein solches Kettenschloss ist beispielsweise aus der EP 1 816 372 A2 bekannt und exemplarisch in den Figuren 10, 11 und 12 gezeigt. Der Kettenschnellverschluss 1000 weist zwei komplementäre Außenlaschen 1001A, 1002A mit je einem fest verbundenen Niet 1001B, 1002B auf. Der Niet 1001B steht von der Innenseite 1003 der jeweiligen Außenlasche 1001A hervor und weist an seinem der Außenlasche 1001A gegenüberliegenden freien Ende 1005 einen Abschnitt 1006 mit reduziertem Durchmesser auf.

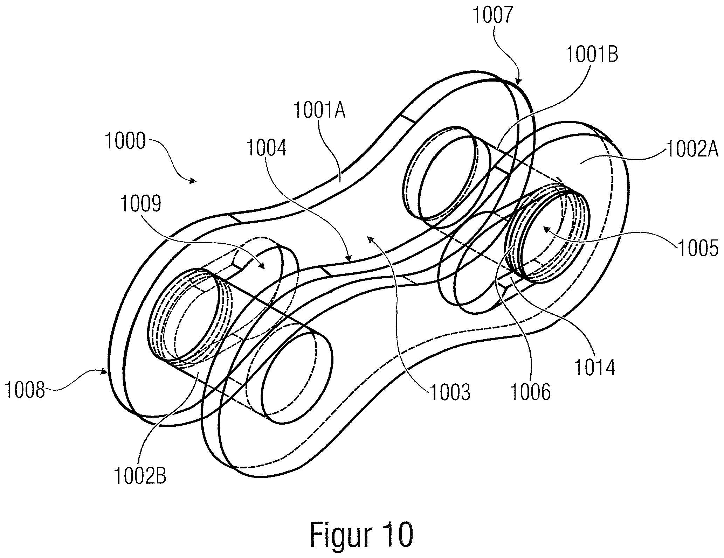

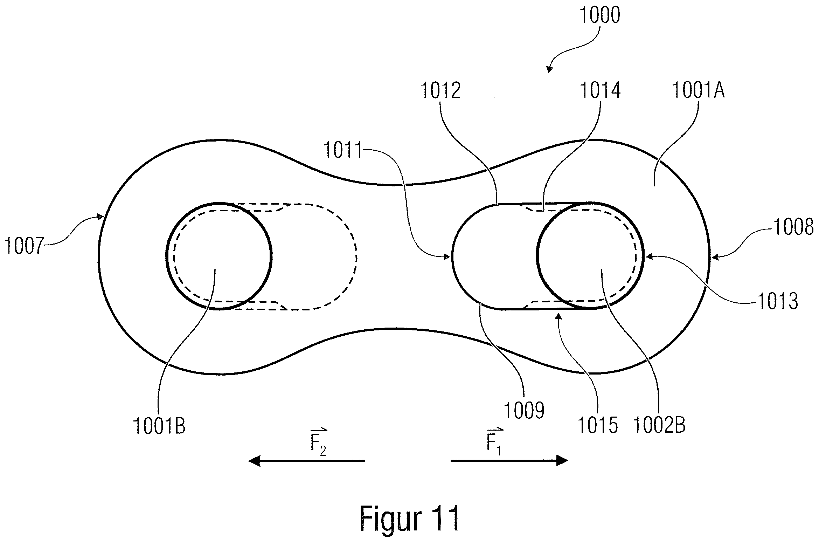

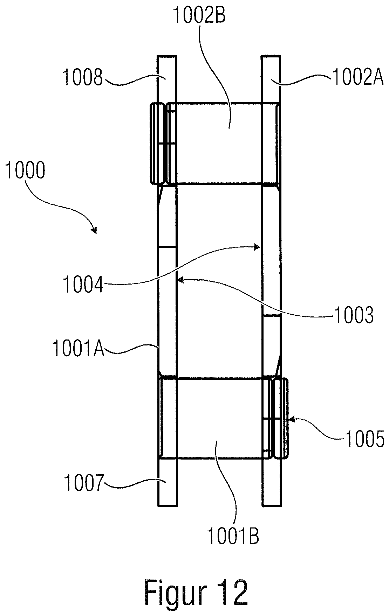

Der feste Niet 1001B ist an einem in Zugrichtung außenliegenden Ende 1007 der Außenlasche 1001A angeordnet. Auf dem gegenüberliegenden in Zugrichtung außenliegenden Ende 1008 weist die Außenlasche 1001A ein Langloch 1009 auf. Auf der dem festen Niet 1001B zugewandten Seite 1011 des Langlochs 1009 weist dieses einen Abschnitt 1012 mit vergrößertem Durchmesser auf.
Um eine Kette mit dem Kettenschnellverschluss 1000 zu verbinden, werden die Niete 1001B, 1002B der beiden Kettenschnellverschluss-Außenlaschen 1001A, 1002A in Löcher zweier Innenlaschen eines (hier nicht dargestellten) jeweils benachbarten Kettenglieds gesteckt. Das jeweilige durch die Innenlaschenglieder hindurchtretende Ende 1005 der Niete 1001B, 1002B der beiden Kettenschnellverschluss-Außenlaschen 1001A, 1002A wird durch den Abschnitt 1012 mit vergrößertem Durchmesser der jeweils gegenüberliegenden komplementären Kettenschnellverschluss-Außenlasche 1001A, 1002A geführt. Anschließend wird die (hier nicht dargestellte) Kette in entgegengesetzte Richtungen F₁, F₂ (Figur 11) auf Zug belastet. Durch die ausgeübte Zugkraft F₁, F₂ rutscht der Abschnitt 1005 mit reduziertem Durchmesser des jeweiligen Niets 1001B zu der dem festen Niet 1001B abgewandten Seite 1013 des Langlochs 1009 und verkeilt sich dort aufgrund einer Presspassung in einem in dem Langloch 1009 ausgebildeten Abschnitt 1014 mit reduziertem Durchmesser. So ist der Kettenschnellverschluss 1000, in der in den Figuren 10, 11, 12 gezeigten Stellung, fixiert und die (hier nicht dargestellte) Kette ist fest verschlossen. Es kann somit also auf das Vernieten einzelner Kettenglieder verzichtet werden.

Die US4394810 offenbart eine Vorrichtung zum Auftrennen einer mit einem Kettenschnellverschluss verschlossenen Kette gemäß dem Oberbegriff der Ansprüche 1 und 14. Zum Auftrennen einer mit einem Kettenschnellverschluss verschlossenen Kette gibt es wiederum spezielles Werkzeug. Hierfür sind sogenannte Kettenzangen bekannt. Die vorderen Enden einer Kettenzange werden in die Innenlaschen der dem Kettenschnellverschluss benachbarten Kettenglieder eingeführt und kommen mit den fixierten Nieten des Kettenschnellverschlusses zur Anlage. Durch Betätigen der Kettenzange schließen sich die vorderen Enden der Zange auf bekannte Weise. Die im Kettenschnellverschluss fixierten Niete werden somit zueinander gedrückt und rutschen in dem Langloch entlang in Richtung des Abschnitts mit dem größeren Durchmesser. Dort angekommen können die Niete durch laterales Herausziehen der komplementären Kettenschnellverschluss-Laschen entfernt werden. Der Kettenschnellverschluss wird so geöffnet und die Kette kann aufgetrennt werden. Derartige Kettenzangen sind einfache Mittel zum Trennen und Öffnen von Ketten, die mit einem Kettenschnellverschluss verschlossen sind. Im Gegensatz zu dem zuvor beschriebenen Kettennieter führen die beiden Zangenhälften eine Rotationsbewegung um das gemeinsame Gelenk der Zange aus. Es muss daher ein Hebelarm bereitgestellt werden, um die benötigte Kraft zum Lösen eines Kettenschnellverschlusses aufzubringen. Aus diesem Grund weisen Zangen relativ lange Griffe auf. Die Kettenzange ist daher, im Vergleich zu dem zuvor erwähnten mobilen Kettennieter mit kompakter Abmessung, verhältnismäßig groß und unhandlich.

Es ist eine Aufgabe der vorliegenden Erfindung, Vorrichtungen zum Öffnen eines Kettenschnellverschlusses dahingehend zu verbessern, dass diese einfach handhabbar sind und dabei gleichzeitig eine kompakte Größe aufweisen.

Diese Aufgabe wird erfindungsgemäß durch eine Vorrichtung zum Öffnen eines Kettenschnellverschlusses mit den Merkmalen von Anspruch 1, sowie mit einem Verfahren zum Herstellen einer solchen Vorrichtung mit den Merkmalen von Anspruch 21 und einem Verfahren zum Öffnen eines Kettenschnellverschlusses mittels einer solchen Vorrichtung mit den Merkmalen von Anspruch 22 gelöst.

Die erfindungsgemäße Vorrichtung ist geeignet zum Betätigen, das heißt zum Öffnen und/oder Schließen eines Kettenschnellverschlusses, wobei der Kettenschnellverschluss zwei Kettenlaschen und zwei Kettenlaschenverbindungsmittel aufweist. Die erfindungsgemäße Vorrichtung eignet sich außerdem zum Öffnen und/oder Schließen einer mit einem derartigen Kettenschnellverschluss verschlossenen oder zu verschließenden Kette. Der Kettenschnellverschluss ist betätigbar, indem die Kettenlaschenverbindungsmittel relativ zueinander bewegt werden. Innerhalb einer Kette ist der Kettenschnellverschluss ein Kettenglied dieser Kette. Das erste Kraftausübungsmittel ist dazu ausgebildet, um eine Kraft auf das erste Kettenlaschenverbindungsmittel des Kettenschnellverschlusses auszuüben, und das zweite Kraftausübungsmittel ist dazu ausgebildet, um eine Kraft auf das zweite Kettenlaschenverbindungsmittel des Kettenschnellverschlusses auszuüben. Erfindungsgemäß sind die beiden Kraftausübungsmittel relativ zueinander translatorisch bewegbar. Anhand dieser Translationsbewegung können die jeweiligen Kräfte mittels der Kraftausübungsmittel auf die jeweiligen Kettenlaschenverbindungsmittel übertragen und darauf ausgeübt werden. Aufgrund dieser ausgeübten Kraft können die in der Regel fest mit einer Kettenlasche verbundenen Niete des Kettenschnellverschlusses aus ihrer in der jeweils gegenüberliegenden Kettenlasche vorgesehenen Presspassung herausgeschoben beziehungsweise in diese hineingeschoben werden und das Kettenschloss beziehungsweise die gesamte Kette können somit geöffnet beziehungsweise geschlossen werden. Aufgrund der erfindungsgemäßen translatorischen Relativbewegung der beiden Kraftausübungsmittel kann bei der Vorrichtung auf eine, wie bei Kettenzangen übliche, Rotationsbewegung verzichtet werden. Die erfindungsgemäße Vorrichtung benötigt daher keine, wie bei Kettenzangen üblich, langen Hebelarme als Betätigungsvorrichtung. Die erfindungsgemäße Vorrichtung kann daher kompakte Abmessungen aufweisen. Eine Translationsbewegung der beiden Kraftausübungsmittel relativ zueinander kann auf einfache Weise, beispielsweise durch einfaches Verschieben der beiden Kraftausübungsmittel, erfolgen. Die Handhabung der erfindungsgemäßen Vorrichtung kann somit einfach und intuitiv erfolgen.

Es ist denkbar, dass die Vorrichtung derart ausgebildet ist, dass die beiden Kraftausübungsmittel ausschließlich translatorisch relativ zueinander bewegbar sind. Aufgrund der ausschließlichen translatorischen Relativbewegbarkeit kann auf eine, wie bei Kettenzangen übliche, Rotationsbewegung zum Aufbringen der Kraft vollständig verzichtet werden. Dies führt, wie oben erwähnt, zu einer erfindungsgemäßen Vorrichtung mit kompakten Abmessungen.

Gemäß einer Ausführungsform kann zumindest eines der Kraftausübungsmittel ausgebildet sein, um eine etwa in Kettenlängsrichtung wirkende Kraft auf das jeweilige Kettenlaschenverbindungsmittel auszuüben. In anderen Worten kann also das erste und/oder das zweite Kraftausübungsmittel ausgebildet sein, um eine etwa in Kettenlängsrichtung wirkende Kraft auf das jeweilige Kettenlaschenverbindungsmittel auszuüben. Unter der Kettenlängsrichtung ist diejenige Richtung zu verstehen, in der sich die Kette erstreckt, beziehungsweise in der die einzelnen Glieder der Kette nacheinander, das heißt der Reihe nach, angeordnet sind. Ausgehend von einem Kettenlaschenverbindungsmittel eines in einer Kette angeordneten Kettenglieds, kann eine in Kettenlängsrichtung wirkende Kraft demnach eine Kraft sein, die von diesem Kettenlaschenverbindungsmittel aus zu dem gegenüberliegenden Kettenlaschenverbindungsmittel derselben Kettenlasche gerichtet ist, oder eine in die entgegengesetzte Richtung wirkende Kraft, das heißt eine Kraft, die von diesem Kettenlaschenverbindungsmittel in Richtung eines nächstliegend benachbarten Kettenglieds gerichtet ist. Die Kraftausübungsmittel können also eine in Kettenlängsrichtung gesehene Zug- und/oder Druckkraft auf die Kettenlaschenverbindungsmittel des Kettenschnellverschlusses ausüben.

Es ist vorstellbar, dass zumindest eines der beiden Kraftausübungsmittel derart ausgebildet ist, dass die auf das erste Kettenlaschenverbindungsmittel ausgeübte Kraft und die auf das zweite Kettenlaschenverbindungsmittel ausgeübte Kraft etwa entgegengesetzt gerichtet sind. In anderen Worten können die Kettenlaschenverbindungsmittel aufgrund der mittels der Kraftaufbringungsmittel aufgebrachten entgegengesetzt wirkenden Kräfte beispielweise voneinander weg gezogen oder gedrückt werden, um den Kettenschnellverschluss zu verschließen, oder zueinander hin gedrückt oder gezogen werden, um den Kettenschnellverschluss zu öffnen. Hierfür ist die erfindungsgemäß vorgesehene Translationsbewegung zur Ausübung der entgegengesetzt wirkenden Kräfte vorteilhaft, da die in bekannten Kettenschnellverschlüssen vorgesehenen Langlöcher parallel verlaufende Längsseiten aufweisen, die in der Regel linear beziehungsweise geradlinig verlaufen. Die Translationsbewegung kann vorzugsweise ebenso geradlinig ausführbar sein. Eine Rotationsbewegung hingegen, wie sie beispielsweise von Kettenzangen her bekannt ist, ist zum Betätigen eines solchen geradlinige Längsseiten eines Langlochs aufweisenden Kettenschnellverschlusses weniger geeignet.

Es ist denkbar, dass zumindest eines der beiden Kraftausübungsmittel die Kraft unmittelbar auf das jeweilige Kettenlaschenverbindungsmittel ausübt. So kann die Kraftübertragung direkt erfolgen. Dies kann beispielsweise dadurch ermöglicht werden, dass ein Kraftausübungsmittel direkt mit dem jeweiligen Kettenlaschenverbindungsmittel zur Anlage kommt. Ein Kettenlaschenverbindungsmittel kann beispielsweise ein Niet oder ein Bolzen sein. Eine um einen Niet oder Bolzen herum angeordnete optionale Kettenrolle kann ebenfalls Bestandteil eines Kettenlaschenverbindungsmittels sein. Bei einigen Kettenschnellverschlüssen wird der fest mit einer Kettenlasche des Kettenschnellverschlusses verbundene Niet beispielsweise durch eine Öffnung einer in einem benachbarten Kettenglied vorgesehenen Kettenrolle hindurchgeführt. Der fest mit der Kettenlasche des Kettenschnellverschlusses verbundene Niet ist also von dieser Kettenrolle des Nachbarglieds umgeben und diese Einheit aus Niet und umgebender Kettenrolle wird im Kontext dieser Anmeldung ebenfalls als ein Kettenlaschenverbindungsmittel angesehen. Demnach ist eine mittels eines erfindungsgemäßen Kraftausübungsmittels auf diese Kettenrolle ausgeübte Kraft als eine unmittelbar auf das Kettenlaschenverbindungsmittel ausgeübte Kraft zu verstehen. Die unmittelbar auf das jeweilige Kettenlaschenverbindungsmittel ausgeübte Kraft kann dabei mittels eines innenseitigen Kontakts der Kraftausübungsmittel mit dem jeweiligen Kettenlaschenverbindungsmittel erfolgen. In anderen Worten kontaktieren die Kraftausübungsmittel die sich zugewandten Seiten zweier gegenüberliegend angeordneter Kettenlaschenverbindungsmittel des Kettenschnellverschlusses. Alternativ kann die unmittelbar auf das jeweilige Kettenlaschenverbindungsmittel ausgeübte Kraft mittels eines außenseitigen Kontakts der Kraftausübungsmittel mit dem jeweiligen Kettenlaschenverbindungsmittel erfolgen. In anderen Worten kontaktieren die Kraftausübungsmittel die sich jeweils voneinander abgewandten Seiten zweier gegenüberliegend angeordneter Kettenlaschenverbindungsmittel des Kettenschnellverschlusses.

Gemäß einer weiteren Ausführungsform kann zumindest eines der beiden Kraftausübungsmittel die Kraft auf ein Kettenlaschenverbindungsmittel mittelbar über eine Kettenlasche des Kettenschnellverschlusses oder über ein dem Kettenschnellverschluss benachbartes Kettenglied ausüben; letzteres, wenn der Kettenschnellverschluss in einer Kette angeordnet ist. Da die Kettenlaschenverbindungsmittel fest mit ihren jeweiligen Kettenlaschen verbunden sind, wird eine auf die Kettenlasche ausgeübte Kraft auch auf das jeweilige Kettenlaschenverbindungsmittel übertragen. Die Kraftübertragung auf das Kettenlaschenverbindungsmittel erfolgt also mittelbar über die Kettenlasche. Wenn der Kettenschnellverschluss in einer Kette angeordnet ist, dann ist der Kettenschnellverschluss ein Glied dieser Kette. Dementsprechend ist der Kettenschnellverschluss dann mit einem ersten und einem gegenüberliegenden zweiten, z.B. einem linken und einem rechten, benachbarten Kettenglied verbunden. Gemäß dieser Ausführungsform kann ein Kraftausübungsmittel der erfindungsgemäßen Vorrichtung ausgebildet sein, um die Kraft auf ein benachbartes Kettenglied auszuüben. Diese Kraft wird dann mittelbar über das besagte benachbarte Kettenglied, auf das jeweilige Kettenlaschenverbindungsmittel des Kettenschnellverschlusses aufgebracht. In anderen Worten kann der Kettenschnellverschluss mittels der erfindungsgemäßen Vorrichtung geöffnet und/oder geschlossen werden, indem die Vorrichtung die Kraft nicht direkt auf den Kettenschnellverschluss sondern auf benachbarte Kettenglieder aufbringt, die diese Kraft dann wiederum auf den Kettenschnellverschluss übertragen.

Es ist vorstellbar, dass zumindest eines der beiden Kraftausübungsmittel einen Aufnahmeabschnitt zum Aufnehmen des Kettenschnellverschlusses aufweist, wobei der Aufnahmeabschnitt ausgebildet ist, um ein Verkippen des Kettenschnellverschlusses entlang der Kettenlängsachse zu vermeiden. So kann der Kettenschnellverschluss in dem Aufnahmeabschnitt gelagert beziehungsweise von diesem festgehalten werden, so dass das Öffnen und/oder Schließen des Kettenschnellverschlusses vereinfacht wird. Wenn der Kettenschnellverschluss in einer Kette angeordnet ist, kann ein solcher Aufnahmeabschnitt auch dazu dienen, benachbarte Kettenglieder zu lagern. Der Aufnahmeabschnitt kann die Kette so beispielsweise gegen ein Verdrehen, d.h. gegen eine in Kettenlängsrichtung wirkende Torsionskraft bzw. Rotation, abstützen. Der Ein- und/oder Ausbau eines Kettenschnellverschlusses wird somit vereinfacht.

Der Aufnahmeabschnitt kann einen Eingriffsabschnitt aufweisen, der ausgebildet ist, um zwischen zwei Kettenlaschen eines dem Kettenschnellverschluss benachbarten Kettenglieds einzugreifen, wenn der Kettenschnellverschluss in einer Kette angeordnet ist. Beispielsweise können beide Kraftausübungsmittel je einen Aufnahmeabschnitt mit einem derartigen Eingriffsabschnitt aufweisen. Dabei kann jeder Eingriffsabschnitt in den zwischen den beiden Laschen eines dem Kettenschnellverschluss benachbarten Kettenglieds gebildeten Zwischenraum eingreifen. Dabei können die lateralen Abmessungen des jeweiligen Eingriffsabschnitts etwa mit dem Abstand der beiden Kettenlaschen, d.h. mit den Abmessungen des jeweiligen Kettenlaschen-Zwischenraums, des jeweiligen Kettenglieds korrespondieren, so dass zwischen dem Eingriffsabschnitt und dem Kettenlaschen-Zwischenraum des Kettenglieds eine Form- bzw. Spielpassung besteht. Somit könnte der Eingriffsabschnitt etwa passgenau in den Kettenlaschen-Zwischenraum eines benachbarten Kettenglieds eingreifen. So können die benachbarten Kettenglieder einfach an der erfindungsgemäßen Vorrichtung angebracht werden, um den Ein- und/oder Ausbau des zwischen diesen Kettengliedern angeordneten Kettenschnellverschlusses zu erleichtern.

In einer weiteren Ausgestaltung kann der Aufnahmeabschnitt einen Kontaktabschnitt aufweisen, der mit einem Kettenlaschenverbindungsmittel eines Kettenschnellverschlusses in Kontakt bringbar ist, wobei der Kontaktabschnitt einen Radius aufweist, der im Wesentlichen dem Radius des Kettenlaschenverbindungsmittels entspricht. Der Kontaktabschnitt kann also beispielsweise eine zu dem Kettenlaschenverbindungsmittel komplementäre Form aufweisen. Handelt es sich beispielsweise bei dem Kettenlaschenverbindungsmittel um einen runden Niet oder Bolzen, der darüber hinaus auch von einer runden Kettenrolle umgeben sein kann, so kann der Kontaktabschnitt ebenfalls eine runde Form aufweisen, deren Radius etwa dem Radius des Kettenlaschenverbindungsmittels entspricht. Vorteilhafter Weise kann der Radius des Kontaktabschnitts größer sein als der Radius des Kettenlaschenverbindungsmittels. So passt das Kettenlaschenverbindungsmittel sozusagen in den Kontaktabschnitt hinein und kann von diesem sicher aufgenommen und gehalten beziehungsweise gelagert werden. Dies ermöglicht eine sichere Führung des jeweiligen Kettenlaschenverbindungsmittels beim Ausführen der Translationsbewegung beziehungsweise beim Ausüben der Kraft auf das Kettenlaschenverbindungsmittel mittels der Kraftausübungsmittel.

Es ist denkbar, dass der Aufnahmeabschnitt einen Halteabschnitt aufweist, der ausgebildet ist, um den Kettenschnellverschluss gegen ein Verkippen entlang einer quer zur Kettenlängsachse verlaufenden Achse oder gegen eine aus dem Aufnahmeabschnitt hinaus gerichtete Bewegung zu sichern. Somit kann der Kettenschnellverschluss beim Öffnen und/oder Schließen sicher von dem Halteabschnitt aufgenommen und gehalten beziehungsweise gelagert werden. Der Halteabschnitt verhindert, dass der Kettenschnellverschluss in der Vorrichtung beim Betätigen kippt und dabei möglicher Weise aus der Vorrichtung herausspringt.

Gemäß einer Ausführungsform kann sich der Halteabschnitt zumindest abschnittsweise über eine in Kettenlängsrichtung durch das Kettenlaschenverbindungsmittel verlaufende Mittellinie hinaus erstrecken und der Halteabschnitt kann dabei zumindest abschnittsweise mit einem oberhalb der Mittellinie angeordneten Abschnitt des Kettenlaschenverbindungsmittels in Kontakt sein. Der Halteabschnitt umgreift sozusagen, zumindest teilweise, das Kettenlaschenverbindungsmittel. Dabei umgreift der Halteabschnitt das Kettenlaschenverbindungsmittel zumindest abschnittsweise von oben, d.h. der Halteabschnitt umgreift zumindest teilweise einen oberhalb der Mittellinie befindlichen Teil des Kettenlaschenverbindungsmittels. Der Halteabschnitt hält das Kettenlaschenverbindungsmittel sozusagen fest und verhindert somit ein Herausspringen des Kettenschnellverschlusses aus der Vorrichtung beim Öffnen und/oder Schließen.

Es ist vorstellbar, dass die Vorrichtung eine Linearführungseinrichtung aufweist, wobei die Linearführungseinrichtung ein erstes Linearführungselement und ein zweites Linearführungselement aufweist und das erste Linearführungselement relativ zu dem zweiten Linearführungselement translatorisch bewegbar ist, und wobei zumindest eines der beiden Kraftausübungsmittel an dem ersten oder dem zweiten Linearführungselement angeordnet ist. Die Linearführungseinrichtung ermöglicht eine lineare translatorische Bewegung. Da zumindest eines der Kraftausübungsmittel an dem ersten oder zweiten beweglichen Linearführungselement der Linearführungseinrichtung angebracht ist, kann sich dieses Kraftausübungsmittel ebenso linear translatorisch relativ zu dem jeweils anderen Kraftausübungsmittel bewegen. Mit der Linearführungseinrichtung kann also eine lineare translatorische Relativbewegung der beiden Kraftausübungsmittel bewerkstelligt und verbessert werden.

In einer Ausführungsform ist das zumindest eine der beiden Kraftausübungsmittel rotatorisch bewegbar an dem ersten oder dem zweiten Linearführungselement angeordnet. In einer weiteren Ausführungsform ist das zumindest eine der beiden Kraftausübungsmittel translatorisch bewegbar an dem ersten oder dem zweiten Linearführungselement angeordnet. In einer noch weiteren Ausführungsform ist das zumindest eine der beiden Kraftausübungsmittel rotatorisch und translatorisch bewegbar an dem ersten oder dem zweiten Linearführungselement angeordnet. Beispielsweise kann ein erstes Linearführungselement als ein Lager und ein zweites Linearführungselement als ein darin gelagerter Bolzen vorgesehen sein, wobei eines der beiden Kraftausübungsmittel an dem Bolzen angeordnet ist. Falls der Bolzen selbst in dem Lager nicht bewegbar sein sollte, dient die translatorisch und/oder rotatorisch bewegbare Anbringung des Kraftausübungsmittels an diesem Bolzen dazu, dass das Kraftausübungsmittel durch den Bolzen linear geführt wird während es eine translatorische Bewegung relativ zu dem anderen Kraftausübungsmittel ausführt. Aufgrund der rotatorischen Bewegbarkeit kann das Kraftausübungsmittel beispielsweise um das Linearführungselement herum bewegbar und beispielsweise um dieses schwenkbar sein. Ein Linearführungselement erleichtert die Durchführung einer geradlinigen translatorischen Bewegung der beiden Kraftausübungsmittel relativ zueinander. Das Linearführungselement kann beispielsweise ein Bolzen sein, auf dem eines oder beide Kraftausübungsmittel entlang der Bolzenlängsachse gleiten können. Der Betrag der Translationsbewegung kann beispielsweise durch einen an dem Bolzenende vorgesehenen Sicherungsring oder Splint begrenzt sein. Weitere Führungen, wie z.B. an dem Bolzen und dem Kraftausübungsmittel vorgesehene Nuten und Federn, können das bzw. die Kraftausübungsmittel auf dem Bolzen gegen Rotation sichern. Eine Rotation der Kraftausübungsmittel auf dem Bolzen kann aber gemäß Ausführungsformen auch gewünscht sein.

Es ist denkbar, dass die Vorrichtung ein Lager aufweist, wobei das nicht an einem der beiden Linearführungselemente angeordnete Kraftausübungsmittel translatorisch fixiert an diesem Lager angebracht ist. Das Lager kann zwar eine Rotation des gelagerten Kraftausübungsmittels um eine parallel zur Kettenlängsachse verlaufende Rotationsachse herum erlauben, was wiederum die Ausrichtung der Vorrichtung zu einer Kette hin erleichtert. Das Lager fixiert das gelagerte Kraftausübungsmittel jedoch gegen eine translatorische Bewegung, so dass sich das andere der beiden Kraftausübungsmittel relativ zu dem gelagerten Kraftausübungsmittel bewegen kann.

In einer Ausführungsform kann das erste Linearführungselement ein Innengewinde und das zweite Linearführungselement ein mit dem Innengewinde in Eingriff stehendes Außengewinde aufweisen, wobei eines der beiden Kraftausübungsmittel an dem ersten Linearführungselement angeordnet ist und die translatorische Relativbewegung der beiden Kraftausübungsmittel zueinander durch eine Rotation der miteinander in Eingriff stehenden Gewinde der beiden Linearführungselemente bereitgestellt wird. Beispielsweise kann das zweite Linearführungselement ein Gewindebolzen sein. Das erste Linearführungselement kann ein ein komplementäres Innengewinde aufweisendes Lager sein. Der Gewindebolzen kann gedreht werden, so dass sich der Gewindebolzen an dem Lager abstützt und eine Translationsbewegung ausführt. Dies bietet eine einfache Möglichkeit zur Realisierung einer kompakten Vorrichtung, die eine lineare translatorische Relativbewegung der beiden Kraftausübungsmittel zueinander bereitstellt. Aufgrund der Gewinde kann eine Kraftübersetzung erfolgen, was das Betätigen des Kettenschnellverschlusses erleichtert. Dabei bedarf es zur Kraftübersetzung keiner, wie bei Kettenzangen üblichen, langen Hebelarme.

Es ist denkbar, dass eines der beiden Kraftausübungsmittel einstückig mit der Vorrichtung ausgebildet ist. Dies bietet eine einfache Möglichkeit zur Herstellung der Vorrichtung. Außerdem hat eine einstückige Ausbildung den Vorteil, dass diese eine erhöhte Stabilität im Vergleich zu separaten Verbindungen aufweist.

Gemäß einer Ausführungsform können beide Kraftausübungsmittel entlang einer gemeinsamen Translationsachse relativ zueinander translatorisch bewegbar sein. Dies bietet den Vorteil, dass die Relativbewegung zwischen den beiden Kraftausübungsmitteln auf einfache Weise realisierbar ist. Außerdem wird dadurch die Handhabung der Vorrichtung erleichtert, da beide Kraftausübungsmittel auf derselben Achse relativ zueinander bewegbar sind und die Vorrichtung somit intuitiv bedienbar ist.

In einer weiteren Ausführungsform weist die Vorrichtung einen Anbringungsabschnitt auf, der ausgebildet ist, um die Vorrichtung an einem Multifunktionswerkzeug anzubringen. Somit kann die Vorrichtung in ein Multifunktionswerkzeug integriert werden. Derartige Bestandteile eines Multifunktionswerkzeugs werden auch als Bits bezeichnet. Sobald die Vorrichtung mittels des Anbringungsabschnitts an dem Multifunktionswerkzeug angebracht ist, kann die Vorrichtung als ein Bit des Multifunktionswerkzeugs angesehen werden. Der Anbringungsabschnitt ist ferner vorzugsweise derart ausgebildet, dass die Vorrichtung beweglich an dem Multifunktionswerkzeug anbringbar ist. So kann die Vorrichtung, je nach Bedarf, in dem Multifunktionswerkzeug ein- und/oder ausgeklappt werden.

Die Erfindung betrifft ferner ein Multifunktionswerkzeug mit einer derartigen Vorrichtung. Solche Multifunktionswerkzeuge sind beispielsweise aus dem Radsport bekannt. Diese Multifunktionswerkzeuge sind handlich und kompakt und daher in der Regel portabel. Die Vorrichtung ist als ein Teil beziehungsweise als ein Bit dieses Multifunktionswerkzeugs vorgesehen. Die Vorrichtung ist vorzugsweise beweglich an dem Multifunktionswerkzeug angebracht, so dass die Vorrichtung bei Bedarf ein- und ausklappbar ist.

Die Erfindung betrifft ferner ein Verfahren zum Herstellen einer Vorrichtung zum Betätigen eines Kettenschnellverschlusses mit zwei Kettenlaschen und zwei Kettenlaschenverbindungsmitteln, wobei das Verfahren die Schritte gemäß Anspruch 21 aufweist. Gemäß dieses Verfahrens ist eine Vorrichtung mit den oben genannten Vorteilen herstellbar.

Die Erfindung betrifft außerdem ein Verfahren zum Betätigen eines Kettenschnellverschlusses mit zwei Kettenlaschen und zwei Kettenlaschenverbindungsmittelen mittels einer Vorrichtung zum Betätigen eines Kettenschnellverschlusses, beinhaltend die Schritte gemäß Anspruch 22.

Gemäß eines weiteren Ausführungsbeispiels kann zumindest eines der beiden Kraftausübungsmittel beweglich an der Vorrichtung angeordnet sein. Dies ermöglicht eine einfache Ausrichtung beim Anlegen der erfindungsgemäßen Vorrichtung an einen Kettenschnellverschluss zum Zwecke des Betätigens desselben. Beispielsweise kann bei einer in einem Zweirad eingebauten Kette das bewegliche Kraftausübungsmittel auch dann gut an den Kettenschnellverschluss herangeführt werden, wenn die Kette schwer zugänglich ist. Ein weiterer Vorteil besteht darin, dass ein drehbares Kraftausübungsmittel beispielsweise eingeklappt werden kann, wenn die Vorrichtung nicht gebraucht wird, sodass diese platzsparend verstaubar ist.

Ausführungsbeispiele der Erfindung sind in der Zeichnung dargestellt und werden nachstehend erläutert. Es zeigen:
- Fig. 1: eine Perspektivansicht einer erfindungsgemäßen Vorrichtung in einer ersten Ausführungsform,
- Fig. 2A: eine Seitenansicht der erfindungsgemäßen Vorrichtung gemäß der ersten Ausführungsform,
- Fig. 2B: eine Seitenansicht der erfindungsgemäßen Vorrichtung gemäß der ersten Ausführungsform mit einem Teil eines stilisierten Kettenlaschenverbindungsmittels,
- Fig. 2C: eine Seitenansicht der erfindungsgemäßen Vorrichtung gemäß der ersten Ausführungsform mit einem stilisierten Kettenlaschenverbindungsmittel,
- Fig. 2D: eine Seitenansicht der erfindungsgemäßen Vorrichtung gemäß der ersten Ausführungsform mit einem stilisierten Kettenlaschenverbindungsmittel,
- Fig. 3: eine Perspektivansicht einer erfindungsgemäßen Vorrichtung in einer zweiten Ausführungsform,
- Fig. 4: eine Seitenansicht der erfindungsgemäßen Vorrichtung gemäß der zweiten Ausführungsform,
- Fig. 5: eine Perspektivansicht einer erfindungsgemäßen Vorrichtung mit einem Ausschnitt einer mit einem Kettenschnellverschluss verschlossenen Kette,
- Fig. 6: eine Draufsicht auf eine erfindungsgemäße Vorrichtung mit einem Ausschnitt einer mit einem Kettenschnellverschluss verschlossenen Kette,
- Fig. 7: eine Seitenansicht einer erfindungsgemäßen Vorrichtung mit einem Ausschnitt einer mit einem Kettenschnellverschluss verschlossenen Kette,
- Fig. 8: eine weitere Perspektivansicht einer erfindungsgemäßen Vorrichtung mit einem Ausschnitt einer mit einem Kettenschnellverschluss verschlossenen Kette,
- Fig. 9: eine Perspektivansicht einer erfindungsgemäßen Vorrichtung mit einem Ausschnitt einer mit einem Kettenschnellverschluss verschlossenen Kette sowie mit einem Ausschnitt einer vernieteten Kette,
- Fig. 10: eine Perspektivansicht eines Kettenschnellverschlusses für eine Kette,
- Fig. 11: eine Seitenansicht eines Kettenschnellverschlusses für eine Kette, und
- Fig. 12: eine Draufsicht auf einen Kettenschnellverschluss für eine Kette.

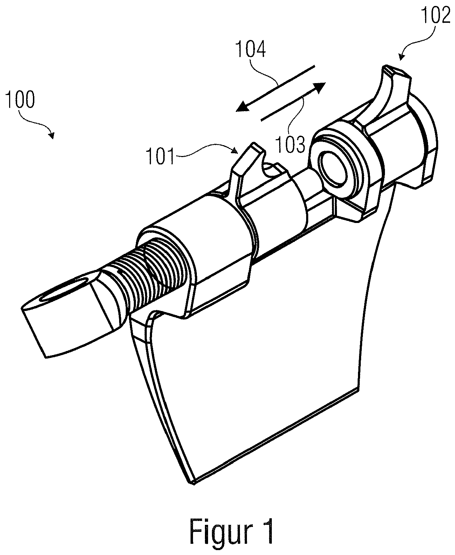

Figur 1 zeigt eine Perspektivansicht einer erfindungsgemäßen Vorrichtung 100 in einer ersten Ausführungsform. Die Vorrichtung 100 ist geeignet zum Betätigen eines in den Figuren 10, 11, 12 gezeigten Kettenschnellverschlusses 1000.

Die Vorrichtung 100 weist ein erstes Kraftausübungsmittel 101 auf, das ausgebildet ist, um eine Kraft auf das erste Kettenlaschenverbindungsmittel 1001B des Kettenschnellverschlusses 1000 auszuüben.

Die Vorrichtung 100 weist ein zweites Kraftausübungsmittel 102 auf, das ausgebildet ist, um eine Kraft auf das zweite Kettenlaschenverbindungsmittel 1002B des Kettenschnellverschlusses 1000 auszuüben.

Die Vorrichtung 100 ist derart ausgebildet, dass das erste Kraftausübungsmittel 101 und das zweite Kraftausübungsmittel 102 relativ zueinander translatorisch bewegbar sind, um den Kettenschnellverschluss 1000 mittels dieser translatorischen Bewegung zu betätigen.

In der in Figur 1 abgebildeten Ausführungsform ist die Vorrichtung 100 derart ausgebildet, dass die beiden Kraftausübungsmittel 101, 102 ausschließlich translatorisch relativ zueinander bewegbar sind. Insbesondere ist die Vorrichtung 100 derart ausgebildet, dass das erste Kraftausübungsmittel 101 translatorisch in eine erste Richtung 103 und in eine entgegengesetzt gerichtete zweite Richtung 104 bewegbar ist. Durch diese translatorische Bewegbarkeit des ersten Kraftausübungsmittels 101 wird die erfindungsgemäße translatorische Relativbewegung zwischen dem ersten und dem zweiten Kraftausübungsmittel 101, 102 bereitgestellt. Die translatorische Relativbewegung ist vorzugsweise eine lineare translatorische Relativbewegung.

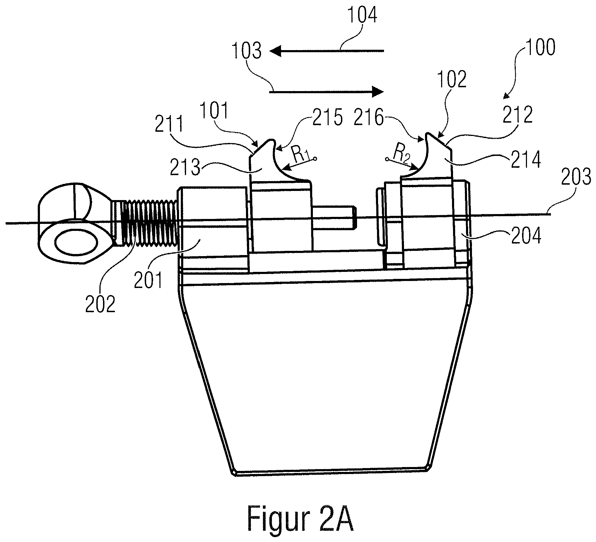

Figur 2A zeigt eine Seitenansicht der erfindungsgemäßen Vorrichtung 100 in der ersten Ausführungsform. Zu erkennen ist das erste Kraftausübungsmittel 101, das ausgebildet ist, um eine Kraft auf das erste Kettenlaschenverbindungsmittel 1001B des Kettenschnellverschlusses 1000 auszuüben. Des Weiteren ist das zweite Kraftausübungsmittel 102 zu erkennen, das ausgebildet ist, um eine Kraft auf das zweite Kettenlaschenverbindungsmittel 1002B des Kettenschnellverschlusses 1000 auszuüben.

Wie bereits zuvor mit Bezug auf Figur 1 erwähnt, ist das erste Kraftausübungsmittel 101 translatorisch bewegbar, so dass die erfindungsgemäße translatorische Relativbewegung zwischen dem ersten Kraftausübungsmittel 101 und dem zweiten Kraftausübungsmittel 102 bereitgestellt wird. Das erste Kraftausübungsmittel 101 kann dabei zumindest in eine erste Richtung 103 bewegbar sein. Das erste Kraftausübungsmittel 101 kann auch in eine der ersten Richtung 103 entgegengesetzte Richtung 104 bewegbar sein.

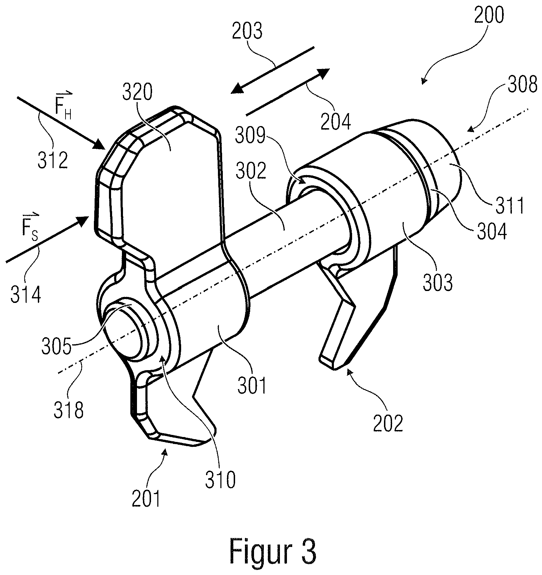

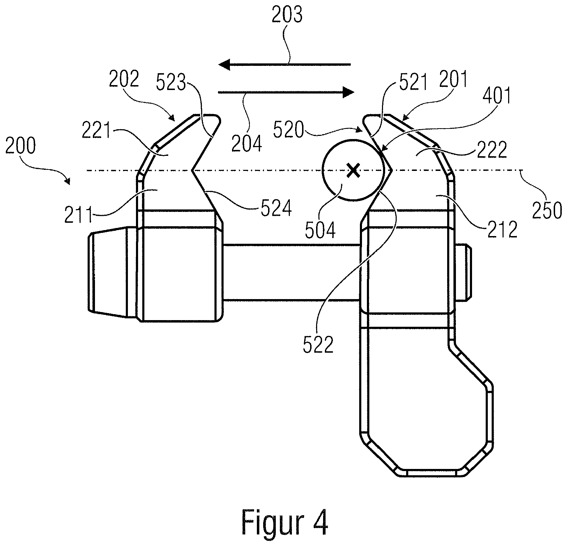

Die Figuren 3 und 4 zeigen eine erfindungsgemäße Vorrichtung 200 gemäß einer zweiten Ausführungsform. Die Vorrichtung 200 ist geeignet um einen in den Figuren 10 bis 12 gezeigten Kettenschnellverschluss 1000 zu betätigen.

Die Vorrichtung 200 weist ein erstes Kraftausübungsmittel 201 auf, das ausgebildet ist, um eine Kraft auf das erste Kettenlaschenverbindungsmittel 1001B des Kettenschnellverschlusses 1000 auszuüben.

Die Vorrichtung 200 weist ferner ein zweites Kraftausübungsmittel 202 auf, das ausgebildet ist, um eine Kraft auf das zweite Kettenlaschenverbindungsmittel 1002B des Kettenschnellverschlusses 1000 auszuüben.

Die Vorrichtung 200 ist derart ausgebildet, dass das erste Kraftausübungsmittel 201 und das zweite Kraftausübungsmittel 202 relativ zueinander translatorisch bewegbar sind, um den Kettenschnellverschluss 1000 mittels dieser translatorischen Bewegung zu betätigen. Die translatorische Relativbewegung ist vorzugsweise eine lineare translatorische Relativbewegung.

Gemäß dieser Ausführungsform ist das erste Kraftausübungsmittel 201 in eine erste Richtung 203 und/oder in eine der ersten Richtung 203 entgegengesetzte zweite Richtung 204 bewegbar. In dieser Ausführungsform wäre es auch denkbar, dass das zweite Kraftausübungsmittel 202 in die erste Richtung 203 und/oder in die der ersten Richtung 203 entgegengesetzte zweite Richtung 204 bewegbar ist.

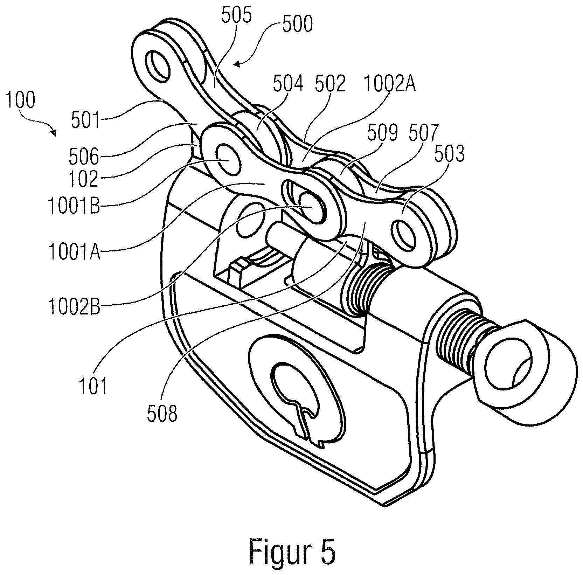

Figur 5 zeigt eine erfindungsgemäße Vorrichtung 100, die mit einer Kette 500 abgebildet ist. Der Übersichtlichkeit wegen ist lediglich ein Ausschnitt der Kette 500 dargestellt. Genauer gesagt sind lediglich drei Kettenglieder 501, 502, 503 einer ansonsten möglicherweise beliebig viele Kettenglieder aufweisenden Kette 500 gezeigt.

Es ist zu erkennen, dass die beiden Kettenglieder 501, 503 mit dem Kettenschnellverschluss 502 (der im Übrigen dem in den Figuren 10 bis 12 gezeigten Kettenschnellverschluss 1000 entspricht) verbunden bzw. verschlossen sind. Der Kettenschnellverschluss 502 ist somit ebenfalls ein Kettenglied der Kette 500.

Der Kettenschnellverschluss 502 weist eine erste Außenlasche 1001A und eine gegenüberliegend angeordnete zweite Außenlasche 1002A auf. Die erste Außenlasche 1001A weist ein erstes Kettenlaschenverbindungsmittel 1001B auf, welches sich in Richtung der zweiten Außenlasche 1002A erstreckt.

Das erste Kettenglied 501 weist eine erste Innenlasche 505 und eine gegenüberliegend angeordnete zweite Innenlasche 506 auf. Zwischen den beiden Innenlaschen 505, 506 ist eine Kettenrolle 504 angeordnet. Die Kettenrolle 504 weist in ihrem Zentrum eine (hier nicht gezeigte) sich durchgehend erstreckende Öffnung auf. Das erste Kettenlaschenverbindungsmittel 1001B des Kettenschnellverschlusses 502 ist in dem in Figur 5 abgebildeten Zustand durch diese in der Kettenrolle 504 vorgesehene Öffnung hindurchgeführt. Somit ist das erste Kettenlaschenverbindungsmittel 1001B des Kettenschnellverschlusses 502 von der Kettenrolle 504 umgeben.

Das dritte Kettenglied 503 weist eine erste Innenlasche 507 und eine gegenüberliegend angeordnete zweite Innenlasche 508 auf. Zwischen den beiden Innenlaschen 507, 508 ist eine Kettenrolle 509 angeordnet. Die Kettenrolle 509 weist in ihrem Zentrum eine (hier nicht gezeigte) sich durchgehend erstreckende Öffnung auf. Das zweite Kettenlaschenverbindungsmittel 1002B des Kettenschnellverschlusses 502 ist in dem in Figur 5 abgebildeten Zustand durch diese in der Kettenrolle 509 vorgesehene Öffnung hindurchgeführt. Somit ist das zweite Kettenlaschenverbindungsmittel 1002B des Kettenschnellverschlusses 502 von der Kettenrolle 509 umgeben.

Die beiden Kettenlaschenverbindungsmittel 1001B, 1002B des Kettenschnellverschlusses 502 können beispielsweise als Niet, Bolzen oder Verbindungsstift ausgebildet sein.

In Figur 5 sind die beiden Kraftausübungsmittel 101, 102 teilweise von den dargestellten Innenlaschen 505, 506, 507, 508 des ersten bzw. dritten Kettenglieds 501, 503 verdeckt und somit nur teilweise sichtbar. Es ist der Figur 5 jedoch zu entnehmen, dass die Kettenglieder 501, 502, 503 derart an der Vorrichtung 100 angeordnet sind, dass die beiden Kraftausübungsmittel 101, 102 zumindest abschnittsweise mit den Kettenrollen 504, 509 in Kontakt sind.

Dies soll näher mit Bezug auf Figur 2A erläutert werden. Hier sind die beiden Kraftausübungsmittel 101, 102 nicht von einer Kette verdeckt und somit erkennbar. Das erste Kraftausübungsmittel 101 weist einen ersten Aufnahmeabschnitt 211 zum Aufnehmen des Kettenschnellverschlusses 502 auf. Das zweite Kraftausübungsmittel 102 weist einen zweiten Aufnahmeabschnitt 212 zum Aufnehmen des Kettenschnellverschlusses 502 auf.

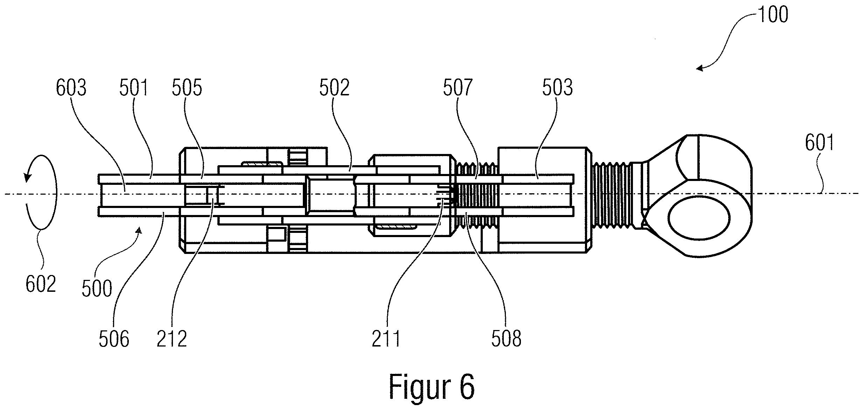

Die Aufnahmeabschnitte 211, 212 sind ausgebildet, um ein Verkippen des Kettenschnellverschlusses 502 entlang der Kettenlängsachse 601 (Figur 6) zu vermeiden. Hierfür soll kurz auf Figur 6 verwiesen werden. Figur 6 zeigt eine Draufsicht der erfindungsgemäßen Vorrichtung 100 mit einer an der Vorrichtung 100 angeordneten Kette 500. Die Kette 500 ist ausschnittsweise gezeigt und weist ein erstes, zweites und drittes Kettenglied 501, 502, 503 auf.

Die Kettenglieder 501, 502, 503 sind entlang der Kettenlängsachse 601 angeordnet. In Figur 6 sind ebenfalls die zuvor erwähnten Aufnahmeabschnitte 211, 212 zu sehen. Die Aufnahmeabschnitte 211,212 sind ausgebildet, um ein Verkippen des Kettenverschlusses 502 entlang der Kettenlängsachse 601 zu vermeiden. Ein derartiges Verkippen ist symbolisch mit dem Pfeil 602 angedeutet. Hierbei handelt es sich um eine Rotation um die Kettenlängsachse 601 herum.

Zur weiteren Erläuterung der Ausführungsformen der Aufnahmeabschnitte 211, 212 soll nun erneut auf Figur 2A verwiesen werden. Hier ist des Weiteren zu erkennen, dass der erste Aufnahmeabschnitt 211 einen ersten Eingriffsabschnitt 213 aufweist. Der zweite Aufnahmeabschnitt 212 weist einen zweiten Eingriffsabschnitt 214 auf. Die beiden Eingriffsabschnitte 213, 214 sind ausgebildet, um zwischen zwei Kettenlaschen 505, 506,507, 508 (Figuren 5 und 6) eines dem Kettenschnellverschluss 502 benachbarten Kettenglieds 501, 503 einzugreifen, wenn der Kettenschnellverschluss 502 in einer Kette 500 angeordnet ist.

Bezüglich der Eingriffsabschnitte 213, 214 ist wiederum in der Draufsicht in Figur 6 zu erkennen, dass deren laterale Ausdehnung in Richtung der beiden gegenüberliegenden Kettenlaschen 505, 506 eines Kettenglieds 501 etwa der Breite des zwischen diesen beiden Kettenlaschen 505, 506 gebildeten Zwischenraums 603 entspricht. In anderen Worten entspricht die Breite der Eingriffsabschnitte 213, 214 etwa der lichten Weite zwischen zwei gegenüberliegend angeordneten Kettenlaschen 505, 506. Der erste Eingriffsabschnitt 213 greift also etwa form- und passgenau in den Zwischenraum 603 des dem Kettenschnellverschluss 502 benachbarten ersten Kettenglieds 501 ein. Selbiges gilt für den zweiten Eingriffsabschnitt 214, der etwa form- und passgenau in den Zwischenraum des dem Kettenschnellverschluss 502 benachbarten dritten Kettenglieds 503 eingreift.

Zur weiteren Erläuterung der Ausführungsformen der Aufnahmeabschnitte 211, 212 soll nun erneut auf Figur 2A verwiesen werden. Hier ist des Weiteren zu erkennen, dass der erste Aufnahmeabschnitt 211 einen ersten Kontaktabschnitt 215 aufweist, der mit einem Kettenlaschenverbindungsmittel 1001B eines Kettenschnellverschlusses 502 in Kontakt bringbar ist. Der zweite Aufnahmeabschnitt 212 weist einen zweiten Kontaktabschnitt 216 auf, der mit dem jeweils anderen Kettenlaschenverbindungsmittel 1002B des Kettenschnellverschlusses 502 in Kontakt bringbar ist.

Der erste Kontaktabschnitt 215 weist einen Radius R₁ auf. Der zweite Kontaktabschnitt 216 weist einen Radius R₂ auf. Die Radien R₁, R₂ entsprechen im Wesentlichen dem Radius des jeweiligen Kettenlaschenverbindungsmittels 1001B, 1002B.

Beispielsweise entspricht der erste Radius R₁ im Wesentlichen dem Radius bzw. dem Außenumfang der in Figur 5 gezeigten Kettenrolle 509 des dritten Kettenglieds 503. Der zweite Radius R₂ entspricht im Wesentlichen dem Radius bzw. dem Außenumfang der in Figur 5 gezeigten Kettenrolle 504 des ersten Kettenglieds 501. Wie zuvor erwähnt, sind die Kettenrollen 504, 509 auch als Kettenlaschenverbindungsmittel zu verstehen.

Durch die im Wesentlichen übereinstimmenden Radien R₁, R₂ der Kontaktabschnitte 215, 216 und der Kettenrollen 504, 509 können die Kettenlaschenverbindungsmittel 504, 509 formschlüssig mit den Kontaktabschnitten 215, 216 in Kontakt kommen. So kann der Kettenschnellverschluss 502 formschlüssig von den Aufnahmeabschnitten 211, 212 aufgenommen und sicher gehalten bzw. gelagert werden. Außerdem können die Kraftausübungsmittel 101, 102 so vorteilhaft die zum Betätigen des Kettenschnellverschlusses 502 benötigten Kräfte auf die Kettenlaschenverbindungsmittel 1001B, 1002B; 504, 509 ausüben.

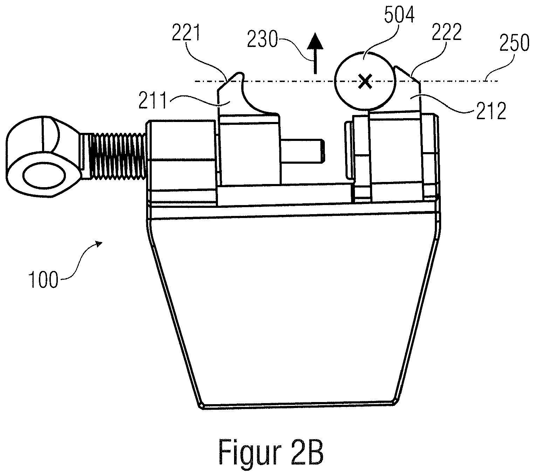

Zur weiteren Erläuterung der Ausführungsformen der Aufnahmeabschnitte 211, 212 soll nun auf Figur 2B verwiesen werden. Hier ist die erfindungsgemäße Vorrichtung 100 in einer Seitenansicht gezeigt, wobei im Vergleich zu der Figur 2A hier zusätzlich ein exemplarisches Kettenlaschenverbindungsmittel in Form einer Kettenrolle 504 eingezeichnet ist.

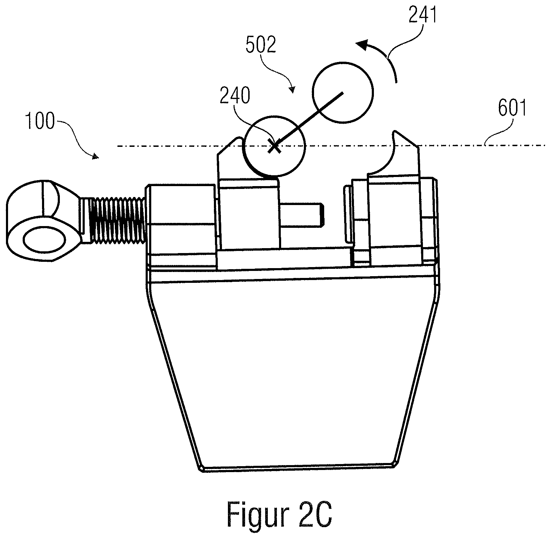

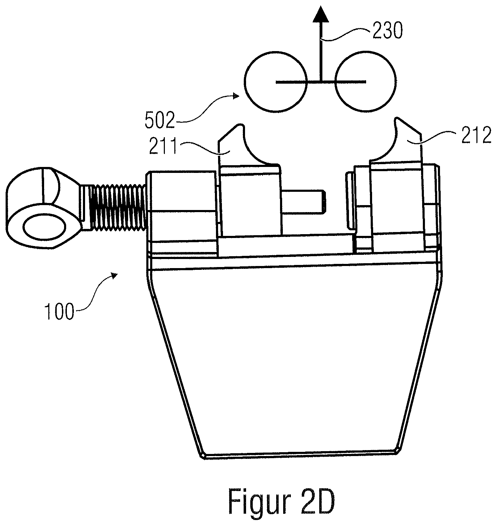

Der erste Aufnahmeabschnitt 211 weist einen ersten Halteabschnitt 221 auf. Der zweite Aufnahmeabschnitt 212 weist einen zweiten Halteabschnitt 222 auf. Die beiden Halteabschnitte 221, 222 sind ausgebildet, um den Kettenschnellverschluss 502 gegen ein Verkippen entlang einer quer zur Kettenlängsachse 601 verlaufenden Achse 240 (Figur 2C) oder gegen eine aus dem Aufnahmeabschnitt hinaus gerichtete Bewegung 230 (Figur 2D) zu sichern.

In Figur 2C ist ein stilisierter Kettenschnellverschluss 502 gezeigt. Figur 2C zeigt den Fall des Verkippens entlang einer quer zur Kettenlängsachse 601 verlaufenden Achse 240. Die Achse 240 zeigt in die Blatt- bzw. Zeichenebene hinein. Ein Verkippen des Kettenschnellverschlusses 502 um diese Achse 240 ist durch den symbolisierten Pfeil 241 angedeutet.

Figur 2D zeigt den Fall einer aus den Aufnahmeabschnitten 211, 212 hinaus gerichteten Bewegung 230. Der hier gezeigte stilisierte Kettenschnellverschluss 502 bewegt sich hierbei aus den Aufnahmenabschnitten 211, 212 hinaus, was durch den symbolisierten Pfeil 230 angedeutet ist.

Wie eingangs erwähnt, weisen die Aufnahmeabschnitte 211, 212 einen Halteabschnitt 221, 222 auf, der ausgebildet ist, um den Kettenschnellverschluss 502 gegen diese in den Figuren 2C und 2D gezeigten Bewegungen zu sichern. Die Halteabschnitte 221, 222 halten sozusagen den Kettenschnellverschluss 502 in der Vorrichtung 100 fest.

In Figur 2B ist des Weiteren zu erkennen, dass sich die Halteabschnitte 221, 222 zumindest abschnittsweise über eine in Kettenlängsrichtung durch das Kettenlaschenverbindungsmittel 504 verlaufende Mittellinie 250 hinaus erstreckt. Der oberhalb der Mittellinie 250 angeordnete Teil des Halteabschnitts 222 ist zumindest abschnittsweise mit dem oberhalb der Mittellinie 250 angeordneten Teil des Kettenlaschenverbindungsmittels 504 in Kontakt.

Dies ist auch in der in Figur 4 abgebildeten Ausführungsform zu sehen. Auch hier weisen die Aufnahmeabschnitte 211, 212 einen Halteabschnitt 221, 222 auf. Die Halteabschnitte 221, 222 erstrecken sich zumindest abschnittsweise über eine in Kettenlängsrichtung durch das Kettenlaschenverbindungsmittel 504 verlaufende Mittellinie 250 hinaus.

Der oberhalb der Mittellinie 250 angeordnete Teil des Halteabschnitts 222 ist hier nicht vollständig, sondern lediglich abschnittsweise mit dem oberhalb der Mittellinie 250 angeordneten Teil des Kettenlaschenverbindungsmittels 504 in Kontakt. Es kann auch lediglich ein einziger Kontaktpunkt 401 zwischen dem oberhalb der Mittellinie 250 angeordneten Teil des Halteabschnitts 222 und dem oberhalb der Mittellinie 250 angeordneten Teil des Kettenlaschenverbindungsmittels 504 vorgesehen sein.

Dies wird in vorliegendem Ausführungsbeispiel unter anderem dadurch realisiert, dass eine das Kettenlaschenverbindungsmittel 504 kontaktierende Kontaktfläche 520 des Halteabschnitts 222 als ein geradlinig verlaufender Abschnitt 521 ausgebildet ist. Dieser geradlinig verlaufende Abschnitt 521 verläuft tangential entlang der kreisrunden Form der Kettenrolle 504 und berührt diese an genau einem Punkt 401. In anderen Worten weist der Halteabschnitt 222 einen geradlinig verlaufenden Abschnitt 521 auf, der ausgebildet ist, um das Kettenlaschenverbindungsmittel 504 zu kontaktieren.

Der hier unterhalb des Halteabschnitts 222 angeordnete Aufnahmeabschnitt 212 weist ebenfalls einen geradlinig verlaufenden Abschnitt 522 auf, der ausgebildet ist, um das Kettenlaschenverbindungsmittel 504 zu kontaktieren. Der dem Aufnahmeabschnitt 212 zugehörige geradlinige Abschnitt 522 ist etwa spiegelbildlich zu dem dem Halteabschnitt 222 zugehörigen geradlinigen Abschnitt 521 ausgebildet, wobei die Mittellinie 250 als Spiegelachse dient.

Das gegenüberliegend angeordnete zweite Kraftausübungsmittel 202 weist eine dem oben beschriebenen ersten Kraftausübungsmittel 201 ähnliche Kontur auf. Der Halteabschnitt 221 des zweiten Kraftausübungsmittels 202 weist einen geradlinig verlaufenden Abschnitt 523 auf, der ausgebildet ist, um das Kettenlaschenverbindungsmittel 504 zu kontaktieren. Der unterhalb des Halteabschnitts 221 angeordnete Aufnahmeabschnitt 211 des zweiten Kraftausübungsmittels 202 weist ebenfalls einen geradlinig verlaufenden Abschnitt 524 auf, der ausgebildet ist, um das Kettenlaschenverbindungsmittel 504 zu kontaktieren.

Der dem Aufnahmeabschnitt 211 zugehörige geradlinige Abschnitt 524 ist etwa spiegelbildlich zu dem dem Halteabschnitt 221 zugehörigen geradlinigen Abschnitt 523 ausgebildet, wobei die Mittellinie 250 als Spiegelachse dient.

In anderen Worten weist das erste Kraftausübungsmittel 201 einen ersten bzw. oberen geradlinig verlaufenden Abschnitt 521 und einen zweiten bzw. unteren geradlinig verlaufenden Abschnitt 522 auf. Das zweite Kraftausübungsmittel 202 weist einen ersten bzw. oberen geradlinig verlaufenden Abschnitt 523 und einen zweiten bzw. unteren geradlinig verlaufenden Abschnitt 524 auf. Die beiden oberen und unteren geradlinig verlaufenden Abschnitte 521, 522, 523, 524 des ersten und zweiten Kraftausübungsmittels 201, 202 sind derart ausgebildet, dass sie das Kettenlaschenverbindungsmittel 504 zumindest abschnittsweise umgreifen.

In der vorliegenden Ausführungsform sind die geradlinig verlaufenden Abschnitte des ersten Kraftausübungsmittels 201 und des zweiten Kraftausübungsmittels 202 so angeordnet, dass sie sich gegenüberstehen. Die sich gegenüberliegend angeordneten geradlinig verlaufenden Abschnitte 521, 522, 523, 524 bilden somit eine etwa prismenartige Form. Diese prismenartige Form ist vorteilhaft derart ausgebildet, dass bekannte sechseck-förmige Schraubenköpfe aufnehmbar sind.

Die geradlinig verlaufenden Abschnitte 521, 522, 523, 524 bilden also eine zu sechseckförmigen Schraubenköpfen komplementäre Negativform. Die geradlinig verlaufenden Abschnitte 521, 522, 523, 524 sind ausgebildet, um einen solchen Schraubenkopf zumindest abschnittsweise zu umgreifen. Der Schraubenkopf kann somit zwischen dem ersten und dem zweiten Kraftausübungsmittel 201, 202, ähnlich zu einem Schraubenschlüssel, eingespannt werden und die Schraube kann dann durch Drehen der erfindungsgemäßen Vorrichtung 200 betätigt werden.Sowohl bei der in Figur 2B gezeigten Vorrichtung 100 als auch bei der in Figur 4 gezeigten Vorrichtung 200 sind die oberhalb der Mittellinie 250 angeordneten Halteabschnitte 221, 222 zueinander ausgerichtet. In anderen Worten erstreckt sich der oberhalb der Mittellinie 250 angeordnete Teil des ersten Halteabschnitts 221 in Kettenlängsrichtung zu dem zweiten Halteabschnitt 222 hin. Der oberhalb der Mittellinie 250 angeordnete Teil des zweiten Halteabschnitts 222 erstreckt sich außerdem in Kettenlängsrichtung zu dem ersten Halteabschnitt 221 hin.

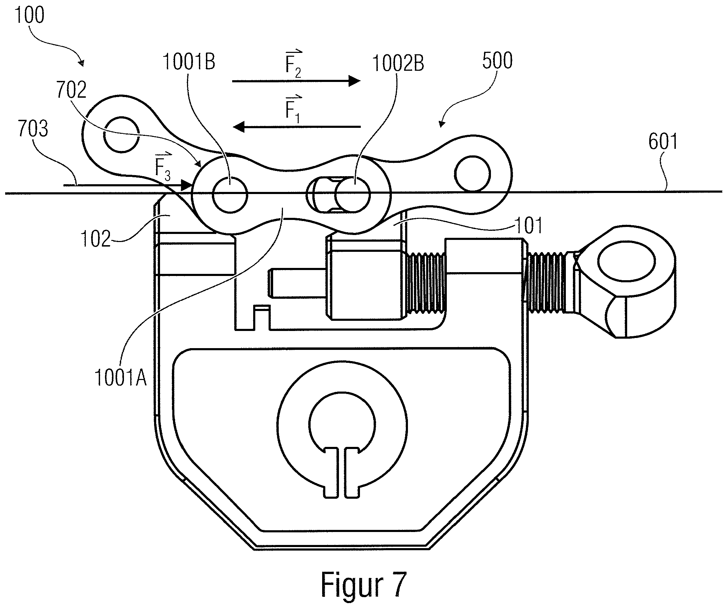

Figur 7 zeigt eine weitere Seitenansicht einer erfindungsgemäßen Vorrichtung 100, an der eine Kette 500 angeordnet ist. Auch hier sind, wiederum teilweise von den Kettengliedern verdeckt, die beiden Kraftausübungsmittel 101, 102 zu erkennen. Zumindest das erste Kraftausübungsmittel 101 ist dazu ausgebildet, um eine in Kettenlängsrichtung, d.h. eine entlang der Kettenlängsachse 601, wirkende Kraft F₁, F₂ auf das Kettenlaschenverbindungsmittel 1002B auszuüben.

In der in Figur 7 gezeigten Ausführungsform stützt sich das gegenüberliegend angeordnete Kettenlaschenverbindungsmittel 1001B an dem zweiten Kraftausübungsmittel 102 ab. Dementsprechend übt das zweite Kraftausübungsmittel 102 eine Kraft auf das Kettenlaschenverbindungsmittel 1001B aus, die der von dem ersten Kraftausübungsmittel 101 auf das Kettenlaschenverbindungsmittel 1002B ausgeübten Kraft in Betrag und Richtung entgegengesetzt gerichtet ist.

Beispielsweise wird bei einer aufeinanderzu gerichteten translatorischen Relativbewegung der beiden Kraftausübungsmittel 101, 102 eine Kraft F₁ von dem ersten Kraftausübungsmittel 101 auf das Kettenlaschenverbindungsmittel 1002B ausgeübt. Gleichzeitig übt das zweite Kraftausübungsmittel 102 auf das Kettenlaschenverbindungsmittel 1001B eine betragsgleiche und entgegengesetzt gerichtete Kraft F₂ aus.

In der hier gezeigten Ausführungsform üben die beiden Kraftausübungsmittel 101, 102 die jeweilige Kraft F₁, F₂ unmittelbar auf das jeweilige Kettenlaschenverbindungsmittel 1001B, 1002B aus. Wie bereits zuvor, unter anderem mit Bezug auf Figur 5, beschrieben wurde, zählen auch die Kettenrollen 504, 509 zu den Kettenlaschenverbindungsmitteln. Dementsprechend ist auch eine unmittelbar auf die Kettenrollen 504, 509 ausgeübte Kraft als eine unmittelbar auf die Kettenlaschenverbindungsmittel 1001B, 1002B ausgeübte Kraft im Kontext der vorliegenden Erfindung zu verstehen.

Es ist jedoch auch denkbar, dass zumindest eines der Kraftausübungsmittel 101, 102 die Kraft F₁, F₂ auf ein Kettenlaschenverbindungsmittel 1001B, 1002B mittelbar über eine Kettenlasche 1001A, 1002A des Kettenschnellverschlusses 1000, 502 ausübt.

Hierfür könnte beispielsweise in der in Figur 7 gezeigten Ausführungsform das erste Kraftausübungsmittel 101 die Kraft F₁ unmittelbar auf das Kettenlaschenverbindungsmittel 1002B ausüben. Das zweite Kraftausübungsmittel 102 hingegen kann beispielsweise mit der Außenseite 702 der Kettenlasche 1001A in Kontakt kommen und somit mittelbar eine, hier mit Bezugszeichen F₃ bezeichnete, Kraft 703 auf das Kettenlaschenverbindungsmittel 1001B ausüben, wobei die Kraft F₃ betragsgleich und entgegengesetzt zur Kraft F₁ gerichtet ist.

Ebenso ist es denkbar, dass zumindest eines der Kraftausübungsmittel 101, 102 die Kraft F₁, F₂ auf ein Kettenlaschenverbindungsmittel 1001B, 1002B mittelbar über ein dem Kettenschnellverschluss 1000, 502 benachbartes Kettenglied 501, 503 ausübt, wenn der Kettenschnellverschluss 1000, 502 in einer Kette 500 angeordnet ist. Hierfür könnten die beiden Kraftausübungsmittel 101, 102 derart ausgebildet sein, dass die Kräfte F₁, F₂ an den beiden dem Kettenschnellverschluss benachbarten Kettengliedern 501, 503 angreift.

Die erfindungsgemäße Vorrichtung kann gemäß Ausführungsbeispielen eine Linearführungseinrichtung aufweisen. Eine derartige Ausführungsform ist beispielsweise in Figur 3 gezeigt.

Hier weist die Vorrichtung 200 eine Linearführungseinrichtung 301, 302 auf, wobei die Linearführungseinrichtung 301, 302 ein erstes Linearführungselement 301 und ein zweites Linearführungselement 302 aufweist. Das erste Linearführungselement 301 ist relativ zu dem zweiten Linearführungselement 302 translatorisch bewegbar. Das erste Kraftausübungsmittel 201 ist an dem ersten Linearführungselement 301 angeordnet.

Die Linearführungseinrichtung 301, 302 weist ferner ein drittes Linearführungselement 303 auf, an dem das zweite Kraftausübungsmittel 202 angeordnet ist.

In der in Figur 3 gezeigten Ausführungsform ist das zweite Linearführungselement 302 als ein Bolzen ausgebildet. Das erste und das dritte Linearführungselement 301, 303 sind als Buchsen ausgebildet, die auf dem Bolzen 302 gleiten können. Gemäß einem Ausführungsbeispiel sind beide Buchsen 301, 303 gleitend auf dem Bolzen 302 angeordnet.

Beide Buchsen 301, 303 können somit sowohl in eine erste Richtung 203, als auch in eine entgegengesetzte zweite Richtung 204 translatorisch bewegt werden.

Die erste Buchse 301 weist ferner auf der dem ersten Kraftausübungsmittel 201 gegenüberliegenden Seite ein Betätigungselement 320 auf. Auf das Betätigungselement 320 kann eine Kraft 314 ausgeübt werden, wodurch sich die erste Buchse 301, auf dem Bolzen 302 gleitend, in Richtung 204 zu der zweiten Buchse 303 hin bewegt. Eine der Kraft 314 entgegengesetzt gerichtete und auf das Betätigungselement 320 ausgeübte Kraft bewirkt dementsprechend, dass sich die erste Buchse 301, auf dem Bolzen 302 gleitend, in Richtung 203 von der zweiten Buchse 303 weg bewegt.

Zusammen mit den Buchsen 301, 303 bewegen sich auch die an den Buchsen 301, 303 angeordneten Kraftausübungsmittel 201,202 relativ zueinander. Die beiden Buchsen 301, 303 und die beiden Kraftausübungsmittel 201, 202 bewegen sich hierbei translatorisch entlang einer gemeinsamen Translationsachse 318.

Zur Begrenzung der Translationsbewegungen der Buchsen 301, 303 können Begrenzer oder Endanschläge vorgesehen sein. So begrenzt beispielsweise eine auf einer ersten Stirnseite 308 des Bolzens 302 angeordnete Scheibe 304 die Translationsbewegung der zweiten Buchse 303 in die zweite Richtung 204. An einem Endabschnitt 305 der gegenüberliegenden Stirnseite des Bolzens 302 kann beispielsweise ein (hier nicht gezeigter) Sicherungsring, Splint oder dergleichen angeordnet sein, um die Translationsbewegung der ersten Buchse 301 in die erste Richtung 203 zu begrenzen.

Gemäß einer weiteren Ausführungsform kann der Bolzen 302 zumindest abschnittsweise ein Außengewinde aufweisen. Gemäß dieser Ausführungsform kann der Bolzen 302 als ein Gewindebolzen ausgebildet sein. Das Außengewinde kann sich beispielsweise von dem Endabschnitt 305 bis etwa zu einer gegenüberliegenden Stirnseite 309 der zweiten Buchse 303 erstrecken. Der Abschnitt des Bolzens 302, der von der zweiten Buchse 303 umgeben ist, kann somit also ein Abschnitt ohne Außengewinde sein. Die zweite Buchse 303 ist daher zumindest rotatorisch um den Bolzen 302 bewegbar. Die zweite Buchse 303 kann aber auch rotatorisch um den Bolzen 302 bewegbar sein, wenn der Bolzen 302 ein Gewinde an dem von der zweiten Buchse 303 umgebenen Abschnitt aufweist. Die zweite Buchse 303 weist kein Innengewinde auf, weshalb sie nicht mit dem Außengewinde des Bolzens 302 in Eingriff steht. Bei einer Rotation des Bolzens 302 dreht die zweite Buchse 303 sozusagen leer durch. Die zweite Buchse 303 dreht aufgrund ihrer rotatorischen Bewegbarkeit, wegen ihres fehlenden Innengewindes, nicht mit dem Bolzen 302 mit. Die zweite Buchse 303 kann bei Rotation des Bolzens 302 somit an der in Figur 3 gezeigten Position verbleiben.

Die erste Buchse 301 hingegen weist gemäß dieses Ausführungsbeispiels ein an ihrer durchgehenden Innenbohrung 310 ausgebildetes Innengewinde auf. Das Innengewinde der ersten Buchse 301 steht mit dem Außengewinde des Bolzens 302 in Eingriff. Bei einer Rotation des Gewindebolzens 302 um seine Mittelachse 318 verschiebt sich somit die erste Buchse 301, je nach Rotationsrichtung des Bolzens 302, in die erste oder die zweite Richtung 203, 204 aufgrund der vorgenannten miteinander in Eingriff stehenden Gewinde. Die Gewindeverbindung wandelt also die Rotation des Bolzens 302 in eine Translationsbewegung der ersten Buchse 301 um.

Die erste Buchse 301 und das daran angeordnete erste Kraftausübungsmittel 201 bewegen sich hierbei translatorisch entlang einer gemeinsamen Translationsachse 318. Beide Buchsen 301, 303 und die beiden Kraftausübungsmittel 201, 202 bewegen sich somit translatorisch relativ zueinander entlang der gemeinsamen Translationsachse 318.

Zum Abstützen der ersten Buchse 301 gegen die Rotationsbewegung des Bolzens 302 kann eine der Rotation entgegengesetzte Haltekraft 312 auf das Betätigungselement 320 ausgeübt werden.

Zur Ausführung der Rotation des Bolzens 302 kann der Bolzen 302 an seiner ersten Stirnseite 308 ein Betätigungselement 311 aufweisen. Hierbei kann es sich um einen Schraubenkopf 311 mit bekannter Eingriffsstruktur, wie beispielsweise Inbus, Torx oder dergleichen handeln.

Gemäß den oben beschriebenen Ausführungsformen kann also mindestens eine der beiden Buchsen 301, 303 entlang des Bolzens 302 gleiten, oder mindestens eine der beiden Buchsen 301, 302 kann zusammen mit dem Bolzen 302 eine eingreifende Gewindeverbindung aufweisen. In beiden Fällen ist das an der ersten Buchse 301 angeordnete erste Kraftausübungsmittel 101, 201 relativ zu dem an der zweiten Buchse 302 angeordneten zweiten Kraftausübungsmittel 102, 202 translatorisch bewegbar.

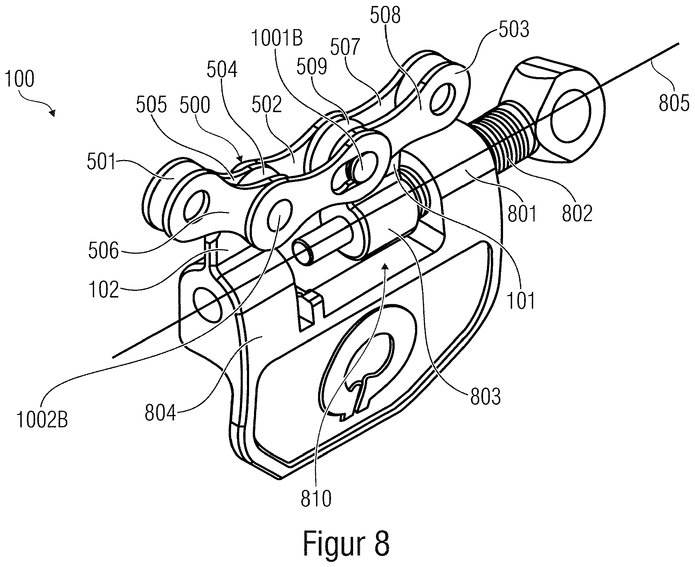

Eine weitere Ausführungsform einer eine Linearführungseinrichtung aufweisenden erfindungsgemäßen Vorrichtung 100 ist in Figur 8 gezeigt.

Die Vorrichtung 100 weist hier eine Linearführungseinrichtung 801, 802 auf. Die Linearführungseinrichtung weist ein erstes Linearführungselement 801 und ein zweites Linearführungselement 802 auf. Das erste Linearführungselement 801 ist relativ zu dem zweiten Linearführungselement 802 translatorisch bewegbar. Das, hier wiederum teils von der Kette 500 verdeckte, erste Kraftausübungsmittel 101 ist an dem zweiten Linearführungselement 802 angeordnet.

In der in Figur 8 gezeigten Ausführungsform ist das zweite Linearführungselement 802 als ein Gewindebolzen ausgeführt. Das erste Linearführungselement 801 ist ein einstückig mit der Vorrichtung 100 ausgebildetes Lager 801. Das Lager 801 weist eine Bohrung auf, durch die der Gewindebolzen 802 hindurchgeführt ist. Die Bohrung des Lagers 801 weist ein Innengewinde auf. Das Innengewinde des Lagers 801 ist komplementär zu dem Außengewinde des Gewindebolzens 802 und steht mit diesem in Eingriff.

An einem stirnseitigen ersten Ende 810 des Gewindebolzens 802 ist eine Buchse 803 angeordnet. An dieser Buchse 803 ist das erste Kraftausübungsmittel 101 angeordnet. Der Gewindebolzen 802 weist in diesem Bereich, in dem die Buchse 803 um den Gewindebolzen 802 herum angeordnet ist, vorzugsweise kein Gewinde auf. Es ist aber auch denkbar, dass der Gewindebolzen 802 auch in diesem von der Buchse 803 umgebenen Bereich ein Gewinde aufweist. Die dem Gewindebolzen zugewandte Innenseite der Buchse 803 weist kein Gewinde auf. Die Buchse 803, und somit auch das daran angeordnete erste Kraftausübungsmittel 101, ist rotatorisch bewegbar an dem Gewindebolzen 802 angebracht, das heißt die Buchse 803, bzw. das erste Kraftausübungsmittel 101, dreht bei Rotation des Gewindebolzens 802 auf diesem leer durch. Das erste Kraftausübungsmittel 101 kann somit bei Rotation des Gewindebolzens 802 in der in Figur 8 gezeigten Position verbleiben.

Bei einer Rotation des Gewindebolzens 802 um seine längs verlaufende Mittelachse 805 stützt sich der Gewindebolzen 802 an dem Lager 801 ab. Die Rotationsbewegung wird mittels der Gewindeverbindung der beiden Linearführungselemente, d.h. Gewindebolzen 802 und Lager 801, in eine Translationsbewegung des Gewindebolzens 802 umgesetzt. Dementsprechend bewegt sich auch das an dem Gewindebolzen 802 angeordnete erste Kraftausübungsmittel 101 mit dem Gewindebolzen 802 mit und führt somit ebenfalls eine Translationsbewegung aus.

Beispielsweise führt bei einer Standard Rechtsgewinde-Ausführung eine Rotation des Gewindebolzens 802 im Uhrzeigersinn zu einer Translationsbewegung des Gewindebolzens 802 und des ersten Kraftausübungsmittels 101, wobei diese Translationsbewegung in Richtung des zweiten Kraftausübungsmittels 102 gerichtet ist. Die beiden Kraftausübungsmittel 101, 102 sind somit relativ zueinander translatorisch bewegbar.

Wie in Figur 8 des Weiteren zu sehen ist, ist das zweite Kraftausübungsmittel 102 einstückig mit der Vorrichtung 100 ausgebildet. Die Vorrichtung 100 weist an der dem Lager 801 gegenüberliegenden Seite ein zweites Lager 804 auf, an dem das zweite Kraftausübungsmittel 102 einstückig ausgebildet ist. Gemäß dieser Ausführungsform weist die Vorrichtung 100 also ein Lager 804 auf, wobei das nicht an einem der beiden Linearführungselemente 801, 802 angeordnete Kraftausübungsmittel 102 translatorisch und rotatorisch fixiert an diesem Lager 804 angeordnet ist.

In einer alternativen Ausführungsform weist die Vorrichtung 100 ein Lager auf, wobei das nicht an einem der beiden Linearführungselemente angeordnete Kraftausübungsmittel translatorisch fixiert und rotatorisch bewegbar an diesem Lager angeordnet ist. Zur Erläuterung dieser Ausführungsform soll noch einmal auf Figur 2A verwiesen werden.

Hier weist die Vorrichtung 100 ebenfalls auf der dem ersten Linearführungselement, d.h. auf der dem Lager 201 gegenüberliegenden Seite ein zweites Lager 204 auf. In diesem zweiten Lager 204 ist das nicht an dem ersten oder zweiten Linearführungselement 201, 202 angeordnete zweite Kraftausübungsmittel 102 gelagert. Das zweite Kraftausübungsmittel 102 ist hier translatorisch fixiert in dem Lager 204 gelagert. Das zweite Kraftausübungsmittel 102 ist jedoch rotatorisch bewegbar in dem Lager 204 gelagert, d.h. das zweite Kraftausübungsmittel 102 kann zumindest abschnittsweise um die Längsachse 203 rotieren.

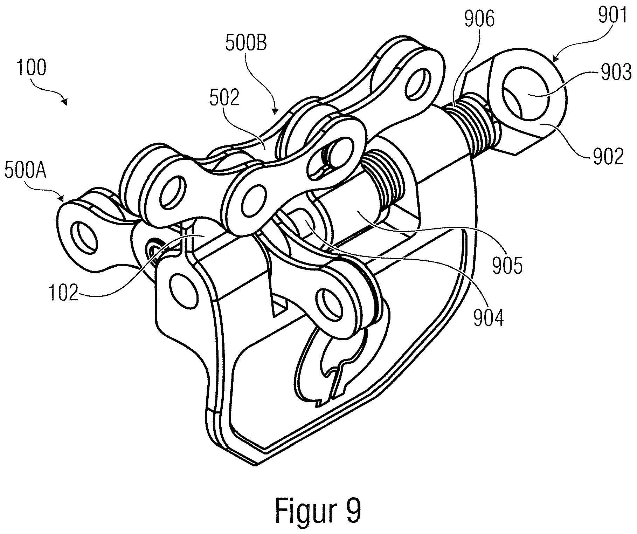

Wie in Figur 9 zu erkennen ist, weist die Vorrichtung 100 einen Anbringungsabschnitt 901 auf. Der Anbringungsabschnitt 901 ist ausgebildet, um die Vorrichtung 100 an einem (hier nicht gezeigten) Multifunktionswerkzeug anzubringen. Beispielsweise kann der Anbringungsabschnitt 901 hierfür eine Öse 902 mit einer Öffnung 903 aufweisen, wobei die Öse 902 an einen an dem Multifunktionswerkzeug vorgesehenen Stift anbringbar ist. An diesem Stift können weitere Werkzeugeinheiten bzw. Bits angebracht sein.

Die Vorrichtung 100 kann außerdem einen Nietdrückstift 904 aufweisen. Der Nietdrückstift 904 kann an der Buchse 905 angeordnet sein. Der Nietdrückstift 904 kann alternativ an dem dem zweiten Kraftausübungsmittel 102 zugewandten stirnseitigen Ende des Gewindebolzens 906 vorgesehen sein. In diesem Fall weist die Buchse 905 ein Loch auf, durch welches der Nietdrückstift 904 hindurchgeführt ist.

Mit dieser, den Nietdrückstift 904 aufweisenden Vorrichtung 100 kann eine vernietete Kette 500A geöffnet beziehungsweise vernietet werden. Mit dieser Vorrichtung 100 kann auch, gegebenenfalls gleichzeitig, ein Kettenschnellverschluss 502 bzw. eine einen Kettenschnellverschluss 502 aufweisende Kette, geöffnet bzw. geschlossen werden.

Nachdem die strukturellen Merkmale der erfindungsgemäßen Vorrichtung beschrieben wurden, soll nachfolgend die Funktionsweise mit Bezug auf die Figuren 1, 2A und 8 näher erläutert werden. In dem in den Figuren gezeigten Beispiel ist das Öffnen beziehungsweise Schließen einer einen Kettenschnellverschluss 502 aufweisenden Kette 500 gezeigt, wobei die Kette 500 nur ausschnittsweise mit drei Kettengliedern 501, 502, 503 abgebildet ist. Die erfindungsgemäße Vorrichtung eignet sich jedoch auch zum Öffnen beziehungsweise Schließen eines Kettenschnellverschlusses 502, 1000, der nicht zwangsläufig in einer Kette angeordnet sein muss.

In dem in Figur 8 gezeigten Beispiel ist eine mit einem Kettenschnellverschluss 502 verschlossene Kette 500 gezeigt. Der Kettenschnellverschluss 502, und somit die Kette 500, soll mit der erfindungsgemäßen Vorrichtung 100 geöffnet werden. Hierfür wird die Kette 500 zunächst, wie in Figur 8 abgebildet, in die Vorrichtung 100 eingelegt.

Die Vorrichtung 100 weist hierfür die in Figur 2A gezeigten Aufnahmeabschnitte 211, 212 auf. Die Kette 500 wird derart auf die Aufnahmeabschnitte 211, 212 aufgelegt, dass die beiden Laschen 507, 508 des dritten Kettenglieds 503 den ersten Aufnahmeabschnitt 211 umgeben, während die beiden Laschen 505, 506 des ersten Kettenglieds 501 den zweiten Aufnahmeabschnitt 212 umgeben. Die beiden Kettenglieder 501, 503 sind somit von den Aufnahmeabschnitten 211, 212 aufgenommen und werden von diesen gegen ein Verkippen entlang der Kettenlängsachse 203 gesichert.

Die beiden Kraftausübungsmittel 101, 102 können dann relativ zueinander translatorisch aufeinander zu bewegt werden. Hierfür wird der Gewindebolzen 202 betätigt. Der Gewindebolzen 202 wird gedreht und stützt sich hierbei in dem mit einem korrespondierenden Innengewinde versehenen Lager 201 ab. Die Drehung des Gewindebolzens 202 wird somit in eine Translationsbewegung des Gewindebolzens 202 umgesetzt. Das an der dem zweiten Kraftausübungsmittel 102 zugewandten stirnseitigen Ende des Gewindebolzens 202 angebrachte erste Kraftausübungsmittel 101 wird somit ebenfalls translatorisch bewegt.

Bei einem Standard-Rechtsgewinde wird beispielsweise eine im Uhrzeigersinn erfolgende Rotation des Gewindebolzens 202 in eine zu dem zweiten Kraftausübungsmittel 102 hin gerichtete Translationsbewegung des Gewindebolzens 202 umgesetzt. Dementsprechend bewegt sich auch das an dem Gewindebolzen 202 angeordnete erste Kraftausübungsmittel 101 translatorisch zu dem zweiten Kraftausübungsmittel 102 hin. Diese aufeinander zu gerichtete Bewegung der beiden Kraftausübungsmittel 101, 102 erfolgt zunächst solange, bis die Kontaktabschnitte 215, 216 mit den Kettenrollen 504, 509 in Kontakt kommen.

Der erste Kontaktabschnitt 215 kommt mit der zwischen dem Kettenschnellverschluss 502 und dem dritten Kettenglied 503 angeordneten Kettenrolle 509 in Kontakt. Der zweite Kontaktabschnitt 216 kommt mit der zwischen dem Kettenschnellverschluss 502 und dem ersten Kettenglied 501 angeordneten Kettenrolle 504 in Kontakt.

Die Kontaktabschnitte 215, 216 weisen einen Radius auf, der im Wesentlichen dem Radius der Kettenrollen 504, 509 entspricht. Dadurch kann die Kette 500 form- bzw. passgenau von der Vorrichtung 100 aufgenommen werden.

Die Kette 500 befindet sich nunmehr also in der in Figur 8 gezeigten Position an der Vorrichtung 100. Die Eingriffsabschnitte 213, 214 sind mit dem jeweiligen Kettenlaschen-Zwischenraum des ersten bzw. dritten Kettenglieds 501, 503 in Eingriff und die Kontaktabschnitte 215, 216 sind mit den Kettenrollen 504, 509 in Kontakt.

Ab diesem Zeitpunkt wird durch weitere Rotation des Gewindebolzens 202, und somit durch die weiter erfolgende relative Translationsbewegung der beiden Kraftausübungselemente 101, 102 in Richtung zueinander, eine Kraft auf den Kettenschnellverschluss 502 ausgeübt. Genauer gesagt üben die Kraftausübungselemente 101, 102 eine Kraft auf die Kettenrollen 504, 509 aus. Die Kettenrollen 504, 509 sind bei der gezeigten Kette 500 Bestandteil je eines Kettenlaschenverbindungsmittels.

Um ein Verkippen 241 (Figur 2C) des Kettenschnellverschlusses 502 entlang einer quer zur Kettenlängsachse 203 gerichteten Achse 240 zu vermeiden, umgreifen die oberhalb der in Kettenlängsachse 203 verlaufenden Mittellinie 250 (Figur 2B) des Kettenschnellverschlusses 502 angeordneten Halteabschnitte 221, 222 die Kettenrollen 504, 509.

Die Halteabschnitte 221, 222 dienen außerdem dazu, ein aus der Vorrichtung 100 hinaus gerichtetes 230 Herausgleiten (Figur 2D) des Kettenschnellverschlusses 502 zu vermeiden Die Halteabschnitte 221, 222 sind insbesondere dann von Vorteil, wenn der Kettenschnellverschluss 502 nicht in einer Kette 500 angeordnet ist und als alleinstehendes Teil geöffnet bzw. verschlossen werden soll. Sofern der Kettenschnellverschluss 502 nämlich in einer Kette 500 angeordnet ist, können bereits die mit den benachbarten Kettengliedern 501, 503 in Eingriff stehenden Eingriffsabschnitte 213, 214 ein Verkippen 241 bzw. Herausgleiten 230 des Kettenschnellverschlusses 502 verhindern.

Der Gewindebolzen 202 wird also nun weiter rotiert, so dass das erste Kraftausübungsmittel 101 sich translatorisch weiter in Richtung des zweiten Kraftausübungsmittels 102 bewegt. Das erste Kraftausübungsmittel 101 übt nun eine Kraft F₁ (Figur 7) auf die zwischen dem Kettenschnellverschluss 502 und dem dritten Kettenglied 503 angeordnete Kettenrolle 509 aus. Das zweite Kraftausübungsmittel 102 übt eine Kraft F₂ (Figur 7) auf die zwischen dem Kettenschnellverschluss 502 und dem ersten Kettenglied 501 angeordnete Kettenrolle 504 aus. Die beiden Kräfte F₁, F₂ sind betragsgleich und entgegengesetzt gerichtet.

Die beiden Kräfte F₁, F₂ sind derart gerichtet, dass die beiden Kettenrollen 504, 509 aufeinander zu gezwungen werden. Durch diese beiden auf die beiden Kettenrollen 504, 509 ausgeübten Kräfte F₁, F₂ werden also die Kettenrollen 504, 509 aufeinander zu bewegt. Genauer gesagt gleiten die beiden Bolzen 1001B, 1002B des Kettenschnellverschlusses 502 in den Langlöchern der jeweils gegenüberliegenden Lasche des Kettenschnellverschlusses 502 in einer aufeinander zu gerichteten Richtung.

Der Gewindebolzen 202 wird nun solange weiter betätigt, bis die beiden Bolzen 1001B, 1002B des Kettenschnellverschlusses 502, aufgrund der translatorischen Relativbewegung der beiden Kraftausübungsmittel 101, 102 zueinander, in den in dem jeweiligen Langloch vorgesehenen Bereich mit vergrößertem Durchmesser gelangen. Sobald die Bolzen 1001B, 1002B in diesem Bereich mit vergrößertem Durchmesser angelangt sind, können die beiden Kettenlaschen des Kettenschnellverschlusses 502 lateral voneinander weg bewegt werden. Der Kettenschnellverschluss 502 ist dann geöffnet.

Die erfindungsgemäße Vorrichtung 100 kann auch dafür genutzt werden, um den Kettenschnellverschluss 502 zu verschließen. Hierfür böte es sich an, die beiden Kraftausübungsmittel 101, 102 in den Kettenlaschen-Zwischenraum des Kettenschnellverschlusses 502 einzuführen, so dass das erste Kraftausübungsmittel 101 innenseitig mit der Kettenrolle 509 in Kontakt kommt, und das zweite Kraftausübungsmittel 102 innenseitig mit der Kettenrolle 504 in Kontakt kommt.

Genauer gesagt weisen sowohl die zwischen dem Kettenschnellverschluss 502 und dem dritten Kettenglied 503 angeordnete Kettenrolle 509, als auch die zwischen dem Kettenschnellverschluss 502 und dem ersten Kettenglied 501 angeordnete Kettenrolle 504 jeweils eine dem Kettenlaschen-Zwischenraum zugewandte Seite auf. Diese Seiten liegen sich außerdem gegenüber. Das erste Kraftausübungsmittel 101 kommt mit der dem Kettenlaschen-Zwischenraum zugewandten Seite der zwischen dem Kettenschnellverschluss 502 und dem dritten Kettenglied 503 angeordneten Kettenrolle 509 in Kontakt. Das zweite Kraftausübungsmittel 102 kommt mit der dem Kettenlaschen-Zwischenraum zugewandten Seite der zwischen dem Kettenschnellverschluss 502 und dem ersten Kettenglied 501 angeordneten Kettenrolle 504 in Kontakt.

Die Vorrichtung 100 kann nun betätigt werden, indem der Gewindebolzen 202 in die der zuvor beschriebenen Richtung entgegengesetzte Richtung rotiert wird. Bei einem Standard-Rechtsgewinde wird der Gewindebolzen 202, 802 also entgegen dem Uhrzeigersinn gedreht. Dies führt wiederum zu einer relativen Translationsbewegung der beiden Kraftausübungselemente 101, 102, wobei diese relative Translationsbewegung nun derart gerichtet ist, dass sich die beiden Kraftausübungselemente 101, 102 voneinander weg bewegen.

Die Kraftausübungsmittel 101, 102 üben dabei wiederum eine Kraft F₁, F₂ auf die jeweiligen Kettenrollen 504, 509 aus. Die beiden Kettenrollen 504, 509 bewegen sich somit ebenfalls voneinander weg. Die Bolzen 1001B, 1002B des Kettenschnellverschlusses 502 gleiten entlang des in den jeweiligen Langlöchern vorgesehenen Abschnitts mit reduziertem Durchmesser bis zu dessen Anschlag. Der Kettenschnellverschluss 502 ist somit geschlossen.

Wie insbesondere in Figur 11 zu sehen ist, weisen die in den Langlöchern 1011 vorgesehenen Abschnitte 1014 mit reduziertem Durchmesser einen geradlinigen bzw. linearen Abschnitt 1015 auf. In diesem linearen Abschnitt 1015 gleiten die Bolzen 1001B, 1002B somit ebenfalls geradlinig bzw. linear. Eine mit der erfindungsgemäßen Vorrichtung 100, 200 ausgeübte lineare Translationsbewegung ist daher zum Betätigen, d.h. zum Öffnen bzw. Schließen, eines Kettenschnellverschlusses 502, 1000 gut geeignet. Bei Kettenzangen hingegen wird aufgrund der relativen Rotationsbewegung der beiden Kettenzangenhälften zueinander stets eine Kraftkomponente auf die Bolzen ausgeübt, die nicht mit der linearen Richtung der Langlöcher übereinstimmt. In anderen Worten, mit Bezug auf Figur 11, bedeutet dies, dass zu den horizontalen Kräften F₁, F₂ bei Kettenzangen stets zusätzlich eine (hier nicht dargestellte) vertikale Kraftkomponente hinzukommt.

## Patentansprüche

1. Vorrichtung (100) zum Betätigen eines Kettenschnellverschlusses (502, 1000) mit zwei Kettenlaschen (1001A, 1002A) und zwei Kettenlaschenverbindungsmitteln (1001B, 1002B), wobei der Kettenschnellverschluss (502, 1000) betätigbar ist, indem die Kettenlaschenverbindungsmittel (1001B, 1002B) relativ zueinander bewegt werden, wobei die Vorrichtung (100) aufweist:
ein erstes Kraftausübungsmittel (101), das ausgebildet ist, um eine Kraft (F₁, F₂) auf das erste Kettenlaschenverbindungsmittel (1001B) des Kettenschnellverschlusses (502, 1000) auszuüben,
ein zweites Kraftausübungsmittel (102), das ausgebildet ist, um eine Kraft (F₁, F₂) auf das zweite Kettenlaschenverbindungsmittel (1002B) des Kettenschnellverschlusses (502, 1000) auszuüben,
wobei das erste Kraftausübungsmittel (101) und das zweite Kraftausübungsmittel (102) relativ zueinander translatorisch bewegbar sind, um den Kettenschnellverschluss (502, 1000) mittels dieser translatorischen Bewegung zu betätigen, und
eine Linearführungseinrichtung (201, 202; 801, 802) mit einem ersten Linearführungselement (201; 801), das als ein Lager (201,801) ausgebildet ist und einem darin gelagerten zweiten Linearführungselement (202; 802), das als ein Gewindebolzen (202,802) ausgebildet ist, **dadurch gekennzeichnet, dass** das erste Kraftausübungsmittel (101) an einem dem zweiten Kraftausübungsmittel (102) zugewandten stirnseitigen Ende des zweiten Linearführungselements (201; 801) angebracht ist.

2. Vorrichtung nach Anspruch 1 oder 2, wobei die Vorrichtung (100) derart ausgebildet ist, dass die beiden Kraftausübungsmittel (101, 102) ausschließlich translatorisch relativ zueinander bewegbar sind.

3. Vorrichtung nach einem der vorhergehenden Ansprüche, wobei zumindest eines der Kraftausübungsmittel (101, 102) ausgebildet ist, um eine in Kettenlängsrichtung (601) wirkende Kraft (F₁, F₂) auf das jeweilige Kettenlaschenverbindungsmittel (1001B, 1002B) auszuüben, und/oder wobei zumindest eines der beiden Kraftausübungsmittel (101, 102) derart ausgebildet ist, dass die auf das erste Kettenlaschenverbindungsmittel (1001B) ausgeübte Kraft (F₁) und die auf das zweite Kettenlaschenverbindungsmittel (1002B) ausgeübte Kraft (F₂) entgegengesetzt gerichtet sind.

4. Vorrichtung nach einem der vorhergehenden Ansprüche, wobei zumindest eines der beiden Kraftausübungsmittel (101, 102) die Kraft (F₁, F₂) unmittelbar auf das jeweilige Kettenlaschenverbindungsmittel (1001B, 1002B; 504, 509) ausübt, oder wobei zumindest eines der beiden Kraftausübungsmittel (101, 102) die Kraft (F₁, F₂) auf ein Kettenlaschenverbindungsmittel (1001B, 1002B; 504, 509) mittelbar über die Kettenlasche (1001A, 1002A) des Kettenschnellverschlusses (502, 1000) oder über ein dem Kettenschnellverschluss (502, 1000) benachbartes Kettenglied (501, 503) ausübt, wenn der Kettenschnellverschluss (502, 1000) in einer Kette (500) angeordnet ist.

5. Vorrichtung nach einem der vorhergehenden Ansprüche, wobei zumindest eines der beiden Kraftausübungsmittel (101, 102) einen Aufnahmeabschnitt (211, 212) zum Aufnehmen des Kettenschnellverschlusses (502, 1000) aufweist, wobei der Aufnahmeabschnitt (211, 212) ausgebildet ist, um ein Verkippen (602) des Kettenschnellverschlusses (502, 1000) entlang der Kettenlängsachse (601) zu vermeiden, und/oder wobei der Aufnahmeabschnitt (211, 212) einen Eingriffsabschnitt (213, 214) aufweist, der ausgebildet ist, um zwischen zwei Kettenlaschen (505, 506; 507, 508) eines dem Kettenschnellverschluss (502, 1000) benachbarten Kettenglieds (501, 503) einzugreifen, wenn der Kettenschnellverschluss (502, 1000) in einer Kette (500) angeordnet ist.

6. Vorrichtung nach Anspruch 5 wobei der Aufnahmeabschnitt (211, 212) einen Kontaktabschnitt (215, 216) aufweist, der mit einem Kettenlaschenverbindungsmittel (1001B, 1002B; 504, 509) eines Kettenschnellverschlusses (502, 1000) in Kontakt bringbar ist, wobei der Kontaktabschnitt (215, 216) einen Radius (R₁, R₂) aufweist, der im Wesentlichen dem Radius des Kettenlaschenverbindungsmittels (1001B, 1002B; 504, 509) entspricht.

7. Vorrichtung nach einem der Ansprüche 5 oder 6 wobei der Aufnahmeabschnitt (211, 212) einen Halteabschnitt (221, 222) aufweist, der ausgebildet ist, um den Kettenschnellverschluss (502, 1000) gegen ein Verkippen (241) entlang einer quer zur Kettenlängsachse (601) verlaufenden Achse (240) oder gegen eine aus dem Aufnahmeabschnitt (211, 212) hinaus gerichtete Bewegung (230) zu sichern.

8. Vorrichtung nach Anspruch 7, wobei sich der Halteabschnitt (211, 212) zumindest abschnittsweise über eine in Kettenlängsrichtung durch das Kettenlaschenverbindungsmittel (1001B, 1002B; 504, 509) verlaufende Mittellinie (250) hinaus erstreckt und wobei der Halteabschnitt (211, 212) zumindest abschnittsweise mit einem oberhalb der Mittellinie (250) angeordneten Abschnitt des Kettenlaschenverbindungsmittels (1001B, 1002B; 504, 509) in Kontakt ist.

9. Vorrichtung nach einem der vorhergehenden Ansprüche, wobei das erste Kraftausübungsmittel (101) rotatorisch und/oder translatorisch bewegbar an dem zweiten Linearführungselement (302; 802) angeordnet ist.

10. Vorrichtung nach einem der vorhergehenden Ansprüche, wobei die Vorrichtung ein zweites Lager (204, 804) aufweist, und wobei das zweite Kraftausübungsmittel (102;) translatorisch fixiert an diesem Lager (204, 804) angebracht ist.

11. Vorrichtung nach einem der vorhergehenden Ansprüche, wobei das erste Linearführungselement (201; 801) ein Innengewinde und das zweite Linearführungselement (202; 802) ein mit dem Innengewinde in Eingriff stehendes Außengewinde aufweist, wobei die translatorische Relativbewegung der beiden Kraftausübungsmittel (101, 102) zueinander durch eine Rotation der miteinander in Eingriff stehenden Gewinde der beiden Linearführungselemente (201, 202; 801, 802) bereitgestellt wird.

12. Vorrichtung nach einem der vorhergehenden Ansprüche, wobei das zweite Kraftausübungsmittel (102) einstückig mit der Vorrichtung ausgebildet ist.

13. Multifunktionswerkzeug mit einer Vorrichtung (100) nach einem der vorhergehenden Ansprüche.

14. Verfahren zum Herstellen einer Vorrichtung (100) zum Betätigen eines Kettenschnellverschlusses (502, 1000) mit zwei Kettenlaschen (1001A, 1002A) und zwei Kettenlaschenverbindungsmitteln (1001B, 1002B), wobei das Verfahren die folgenden Schritte aufweist:
Bereitstellen eines ersten Kraftausübungsmittels (101), das ausgebildet ist, um eine Kraft (F₁, F₂) auf das erste Kettenlaschenverbindungsmittel (1001B) des Kettenschnellverschlusses (502, 1000) auszuüben,
Bereitstellen eines zweiten Kraftausübungsmittels (102), das ausgebildet ist, um eine Kraft (F₁, F₂) auf das zweite Kettenlaschenverbindungsmittel (1002B) des Kettenschnellverschlusses (502, 1000) auszuüben, und
Anordnen der beiden Kraftausübungsmittel (101, 102) zueinander derart, dass die beiden Kraftausübungsmittel (101, 102) sich zumindest abschnittsweise gegenüberliegen und relativ zueinander translatorisch bewegbar sind, um den Kettenschnellverschluss (502, 1000) mittels dieser translatorischen Bewegung zu betätigen,
Bereitstellen einer Linearführungseinrichtung (201, 202; 801, 802), mit einem ersten Linearführungselement (201; 801), das als ein Lager (201,801) ausgebildet ist und einem darin gelagerten zweiten Linearführungselement (202;, das als ein Gewindebolzen ausgebildet ist, **gekennzeichnet durch** Anbringen des ersten Kraftausübungsmittels (101) an einem dem zweiten Kraftausübungsmittel (102) zugewandten Ende des zweiten Linearführungselements (202; 802).

## Claims

1. Device (100) for actuating a quick release chain fastener (502, 1000) comprising two chain link plates (1001A, 1002A) and two chain link plate connection means (1001B, 1002B), the quick release chain fastener (502, 1000) being actuatable in that the chain link plate connection means (1001B, 1002B) are moved in relation to one another, the device (100) comprising:
first force exertion means (101) configured to exert a force (F₁, F₂) on the first chain link plate connection means (1001B) of the quick release chain fastener (502, 1000),
second force exertion means (102) configured to exert a force (F₁, F₂) on the second chain link plate connection means (1002B) of the quick release chain fastener (502, 1000),
wherein the first force exertion means (101) and the second force exertion means (102) are translationally moveable in relation to each other so as to actuate the quick release chain fastener (502, 1000) by means of this translational movement; and
linear guide means (201, 202; 801, 802) comprising a first linear guide element (201; 801) that is configured as a bearing (201, 801) and a second linear guide element (202; 802) stored therein that is configured as a stud bolt (202, 802),
**characterized in that**
the first force exertion means (101) is mounted to a front end of the second linear guide element (201; 801) that faces the second force exertion means (102).

2. Device as claimed in claim 1, the device (100) being configured such that both force exertion means (101, 102) are moveable in relation to each other in an exclusively translational manner.

3. Device as claimed in one of the previous claims, wherein at least one of the force exertion means (101, 102) is configured to exert a force (F₁, F₂), which acts in the longitudinal chain direction (601), on the respective chain link plate connection means (1001B, 1002B) and/or wherein at least one of the two force exertion means (101, 102) is configured such that the force (F₁) exerted on the first chain link plate connection means (1001B) and the force (F₂) exerted on the second chain link plate connection means (1002B) are oppositely directed.

4. Device as claimed in one of the previous claims, wherein at least one of the two force exertion means (101, 102) exerts the force (F₁, F₂) directly on the respective chain link plate connection means (1001B, 1002B; 504, 509), or wherein at least one of the two force exertion means (101, 102) exerts the force (F₁, F₂) on a chain link plate connection means (1001B, 1002B; 504, 509) indirectly via the chain link plate (1001A, 1002A) of the quick release chain fastener (502,1000) or via a chain link (501, 503) adjacent to the quick release chain fastener (502,1000), when the quick release chain fastener (502,1000) is arranged within a chain (500).

5. Device as claimed in one of the previous claims, wherein at least one of the two force exertion means (101, 102) comprises an accommodating portion (211, 212) for accommodating the quick release chain fastener (502, 1000), said accommodating portion (211, 212) being configured to avoid tilting (602) of the quick release chain fastener (502, 1000) along the longitudinal chain axis (601) and/or wherein the accommodating portion (211, 212) comprises an engagement portion (213, 214) configured to engage between two chain link plates (505, 506; 507, 508) of a chain link (501, 503) adjacent to the quick release chain fastener (502, 1000), when the quick release chain fastener (502, 1000) is arranged within a chain (500).

6. Device as claimed in claim 5, wherein the accommodating portion (211, 212) comprises a contact portion (215, 216) which can be brought into contact with a chain link plate connection means (1001B, 1002B; 504, 509) of a quick release chain fastener (502, 1000), said contact portion (215, 216) comprising a radius (R₁, R₂) essentially corresponding to the radius of the chain link plate connection means (1001B, 1002B; 504, 509).

7. Device as claimed in one of claim 5 or 6, wherein the accommodating portion (211, 212) comprises a retaining portion (221, 222) configured to secure the quick release chain fastener (502, 1000) against tilting (241) along an axis (240) extending in a manner that is transverse to the longitudinal chain axis (601) or against a movement (230) directed out of the accommodating portion (211, 212).

8. Device as claimed in claim 7, wherein the retaining portion (211, 212) extends, at least in sections, beyond a center line (250) extending through the chain link plate connection means (1001B, 1002B; 504, 509) in the longitudinal chain direction, and wherein the retaining portion (211, 212) is in contact, at least in sections, with a portion, arranged above the center line (250), of the chain link plate connection means (1001B, 1002B; 504, 509).

9. Device as claimed in one of the previous claims, wherein the first force exertion means (101) is arranged at the second linear guide element (302; 802) in a rotationally and/or translationally moveable manner.

10. Device as claimed in one of the previous claims, the device comprising a second bearing (204, 804), and wherein the second force exertion means (102) is mounted to said bearing (204, 804) in a translationally fixed manner.

11. Device as claimed in one of the previous claims, wherein the first linear guide element (201; 801) comprises an internal thread and the second linear guide element (202; 802) comprises an external thread that is engaged with said internal thread, wherein the translational relative movement of the two force exertion means (101, 102) in relation to each other is provided by rotation of the mutually engaged threads of the two linear guide elements (201, 202; 801, 802).

12. Device as claimed in one of the previous claims, wherein the second force exertion means (102) is configured in one piece with the device.

13. Multifunctional tool comprising a device (100) as claimed in any of the previous claims.

14. Method of manufacturing a device (100) for actuating a quick release chain fastener (502, 1000) comprising two chain link plates (1001A, 1002A) and two chain link plate connection means (1001B, 1002B), the method comprising:
providing first force exertion means (101) configured to exert a force (F₁, F₂) on the first chain link plate connection means (1001B) of the quick release chain fastener (502, 1000),
providing second force exertion means (102) configured to exert a force (F₁, F₂) on the second chain link plate connection means (1002B) of the quick release chain fastener (502, 1000), and
arranging the two force exertion means (101, 102) with respect to each other such that the two force exertion means (101, 102) are, at least in sections, opposed to each other and are translationally moveable in relation to each other so as to actuate the quick release chain fastener (502, 1000) by means of this translational movement,
providing linear guide means (201, 202; 801, 802) comprising a first linear guide element (201; 801) that is configured as a bearing (201, 801) and a second linear guide element (202) stored therein that is configured as a stud bolt,
**characterized by**
mounting the first force exertion means (101) to one end of the second linear guide element (202; 802) that faces the second force exertion means (102).

## Revendications

1. Dispositif (100) destiné à actionner une fermeture rapide de type chaîne (502, 1000) avec deux plaques de chaîne (1001A, 1002A) et deux moyens de connexion de plaque de chaîne (1001B, 1002B), dans lequel la fermeture rapide de type chaîne (502, 1000) peut être actionnée en déplaçant les moyens de connexion de plaque de chaîne (1001B, 1002B) l'un par rapport à l'autre, dans lequel le dispositif (100) présente:
un premier moyen d'application de force (101) qui est réalisé pour exercer une force (F₁, F₂) sur le premier moyen de connexion de plaque de chaîne (1001B) de la fermeture rapide de type chaîne (502, 1000),
un deuxième moyen d'application de force (102) qui est réalisé pour exercer une force (F₁, F₂) sur le deuxième moyen de connexion de plaque de chaîne (1002B) de la fermeture rapide de type chaîne (502, 1000),
dans lequel le premier moyen d'application de force (101) et le deuxième moyen d'application de force (102) peuvent se déplacer en translation l'un par rapport à l'autre pour actionner la fermeture rapide de type chaîne (502, 1000) au moyen de ce mouvement de translation, et
un moyen de guidage linéaire (201, 202; 801, 802) avec un premier élément de guidage linéaire (201; 801) qui est réalisé sous forme de palier (201, 801) et un deuxième élément de guidage linéaire (202; 802) monté dans ce dernier qui est réalisé sous forme de boulon fileté (202, 802),
**caractérisé par le fait que**
le premier moyen d'application de force (101) est placé à une extrémité du côté frontal du deuxième élément de guidage linéaire (201; 801) orientée vers le deuxième moyen d'application de force (102).

2. Dispositif selon la revendication 1, dans lequel le dispositif (100) est réalisé de sorte que les deux moyens d'application de force (101, 102) peuvent se déplacer exclusivement en translation l'un par rapport à l'autre.

3. Dispositif selon l'une des revendications précédentes, dans lequel au moins l'un des moyens d'application de force (101, 102) est réalisé pour exercer une force (F₁, F₂) agissant dans la direction longitudinale de la chaîne (601) sur le moyen de connexion de plaque de chaîne respectif (1001B, 1002B), et/ou dans lequel au moins l'un des deux moyens d'application de force (101, 102) est réalisé de sorte que la force (F₁) exercée sur le premier moyen de connexion de plaque de chaîne (1001B) et la force (F₂) exercée sur le deuxième moyen de connexion de plaque de chaîne (1002B) soient orientées en sens opposé.

4. Dispositif selon l'une des revendications précédentes, dans lequel au moins l'un des deux moyens d'application de force (101, 102) exerce la force (F₁, F₂) directement sur le moyen de connexion de plaque de chaîne respectif (1001B, 1002B; 504, 509), ou dans lequel au moins l'un des deux moyens d'application de force (101, 102) exerce la force (F₁, F₂) sur un moyen de connexion de plaque de chaîne (1001B, 1002B; 504, 509) indirectement par l'intermédiaire de la plaque de chaîne (1001A, 1002A) de la fermeture rapide de type chaîne (502, 1000) ou par l'intermédiaire d'un maillon de chaîne (501, 503) adjacent à la fermeture rapide de type chaîne (502, 1000) lorsque la fermeture rapide de type chaîne (502, 1000) est disposée dans une chaîne (500).

5. Dispositif selon l'une des revendications précédentes, dans lequel au moins l'un des deux moyens d'application de force (101, 102) présente un segment de réception (211, 212) destiné à recevoir la fermeture rapide de type chaîne (502, 1000), dans lequel le segment de réception (211, 212) est réalisé pour empêcher un basculement (602) de la fermeture rapide de type chaîne (502, 1000) le long de l'axe longitudinal de la chaîne (601), et/ou dans lequel le segment de réception (211, 212) présente un segment d'engagement (213, 214) qui est réalisé pour s'engager entre deux plaques de chaîne (505, 506; 507, 508) d'un maillon de chaîne (501, 503) adjacent à la fermeture rapide de type chaîne (502, 1000) lorsque la fermeture rapide de type chaîne (502, 1000) est disposée dans une chaîne (500).

6. Dispositif selon la revendication 5, dans lequel le segment de réception (211, 212) présente un segment de contact (215, 216) qui peut être amené en contact avec un moyen de connexion de plaque de chaîne (1001B, 1002B; 504, 509) d'une fermeture rapide de type chaîne (502, 1000), le segment de contact (215, 216) présentant un rayon (R₁, R₂) qui correspond substantiellement au rayon du moyen de connexion de plaque de chaîne (1001B, 1002B; 504, 509).

7. Dispositif selon l'une des revendications 5 ou 6, dans lequel le segment de réception (211, 212) présente un segment de maintien (221, 222) qui est réalisé pour protéger la fermeture rapide de type chaîne (502, 1000) contre un basculement (241) le long d'un axe (240) s'étendant transversalement à l'axe longitudinal de la chaîne (601) ou contre un mouvement (230) orienté hors du segment de réception (211, 212).

8. Dispositif selon la revendication 7, dans lequel le segment de maintien (211, 212) s'étend au moins par segment au-delà d'une ligne centrale (250) s'étendant dans la direction longitudinale de la chaîne à travers le moyen de connexion de plaque de chaîne (1001B, 1002B; 504, 509), et dans lequel le segment de maintien (211, 212) est en contact au moins par segment avec un segment du moyen de connexion de plaque de chaîne (1001B, 1002B; 504, 509) disposé au-dessus de la ligne centrale (250).

9. Dispositif selon l'une des revendications précédentes, dans lequel le premier moyen d'application de force (101) est disposé de manière à pouvoir se déplacer en rotation et/ou en translation sur le deuxième élément de guidage linéaire (302; 802).

10. Dispositif selon l'une des revendications précédentes, dans lequel le dispositif présente un deuxième palier (204, 804), et dans lequel le deuxième moyen d'application de force (102) est placé de manière fixée en translation à ce palier (204, 804).

11. Dispositif selon l'une des revendications précédentes, dans lequel le premier élément de guidage linéaire (201; 801) présente un taraudage intérieur et le deuxième élément de guidage linéaire (202; 802) présente une filetage extérieur en prise avec le taraudage intérieur, dans lequel le mouvement de translation relatif des deux moyens d'application de force (101, 102) l'un par rapport à l'autre est mis à disposition par une rotation des filets en prise l'un avec l'autre des deux éléments de guidage linéaire (201, 202; 801, 802).

12. Dispositif selon l'une des revendications précédentes, dans lequel le deuxième moyen d'application de force (102) est réalisé d'une seule pièce avec le dispositif.

13. Outil multifonction avec un dispositif (100) selon l'une des revendications précédentes.

14. Procédé de fabrication d'un dispositif (100) destiné à actionner une fermeture rapide de type chaîne (502, 1000) avec deux plaques de chaîne (1001A, 1002A) et deux moyens de connexion de plaque de chaîne (1001B, 1002B), le procédé comprenant les étapes suivantes consistant à:
prévoir un premier moyen d'application de force (101) qui est réalisé pour exercer une force (F₁, F₂) sur le premier moyen de connexion de plaque de chaîne (1001B) de la fermeture rapide de type chaîne (502, 1000),
prévoir un deuxième moyen d'application de force (102) qui est réalisé pour exercer une force (F₁, F₂) sur le deuxième moyen de connexion de plaque de chaîne (1002B) de la fermeture rapide de type chaîne (502, 1000), et
disposer les deux moyens d'application de force (101, 102) l'un par rapport à l'autre de sorte que les deux moyens d'application de force (101, 102) se trouvent au moins par segment opposés l'un à l'autre et de manière à pouvoir se déplacer en translation l'un par rapport à l'autre pour actionner la fermeture rapide de type chaîne (502, 1000) au moyen de ce mouvement de translation,
prévoir un moyen de guidage linéaire (201, 202; 801, 802), avec un premier élément de guidage linéaire (201; 801) qui est réalisé sous forme de palier (201, 801) et un deuxième élément de guidage linéaire (202) monté dans ce dernier qui est réalisé sous forme de boulon fileté,
**caractérisé par** le fait de
placer le premier moyen d'application de force (101) à une extrémité du deuxième élément de guidage linéaire (202; 802) orienté vers le deuxième moyen d'application de force (102).
